# EUROPEAN PATENT APPLICATION

(11) **EP 4 807 896 A1**
(43) Date of publication of application: **16.09.2026**
(21) Application number: 24904190.6
(22) Date of filing: 06.12.2024
(51) Int. Cl.: H01Q 1/24, H04M 1/02, H01Q 1/52, H01Q 1/02, H01Q 1/38, H02J 50/10

(54) **ANTENNA STRUCTURE AND ELECTRONIC DEVICE INCLUDING SAME**

(30) Priority: 11.12.2023 KR 20230178944; 27.12.2023 KR 20230193457
(71) Applicant: Samsung Electronics Co., Ltd., Suwon-si, Gyeonggi-do 16677 (KR)
(72) Inventor: SEO, Donginn, Suwon-si Gyeonggi-do 16677 (KR); LEE, Dohyeon, Suwon-si Gyeonggi-do 16677 (KR); BYUN, Wanju, Suwon-si Gyeonggi-do 16677 (KR); EOM, Joohoon, Suwon-si Gyeonggi-do 16677 (KR); LEE, Dongmin, Suwon-si Gyeonggi-do 16677 (KR); CHO, Sujeong, Suwon-si Gyeonggi-do 16677 (KR); HONG, Hyunju, Suwon-si Gyeonggi-do 16677 (KR)
(74) Representative: Gulde & Partner
(86) International application number: PCT/KR2024/019965
(87) International publication number: WO 2025/127625

(57) **Abstract**

According to an embodiment of the present disclosure, an electronic device may comprise a housing, a circuit board, an antenna structure, or a conductive connection member. The housing may include a first housing part or a second housing part. The first housing part may include an opening. The second housing part may be configured to move with respect to the first housing part. The circuit board may be disposed in the second housing part. The antenna structure may be disposed in the first housing part. The conductive connection member may be electrically connected to the circuit board and the antenna structure. The antenna structure may include a substrate or a first coil. The first coil may be disposed on the substrate. At least a part of the first coil may overlap the opening.

## Description

### [Technical Field]

Various embodiments disclosed herein relate to an electronic device, for example, to an antenna structure and an electronic device including the same.

### [Background Art]

With the remarkable development of information and communication technology and semiconductor technology, the dissemination and use of various electronic devices have been rapidly increasing. In particular, recent electronic devices have been developed to be portable and enable communication.

The term "electronic device" may refer to a device that performs a specific function according to an installed program, such as a home appliance, an electronic organizer, a portable multimedia player, a mobile communication terminal, a tablet PC, a video/audio device, a desktop/laptop computer, or a vehicle navigation system. For example, such electronic devices may output stored information as sound or an image. As the degree of integration of electronic devices increases and ultra-high-speed, large-capacity wireless communication becomes widespread, various functions may be incorporated in a single electronic device such as a mobile communication terminal. For example, not only a communication function but also an entertainment function such as a game, a multimedia function such as music/video playback, a communication and security function for mobile banking, or a scheduler function or an electronic wallet function may be integrated into a single electronic device. Such an electronic device is being miniaturized so that a user may conveniently carry the electronic device.

As mobile communication services are expanded to a multimedia service area, in order for a user to sufficiently use multimedia services as well as voice calls or short messages, the size of a display of an electronic device may increase.

The above information may be provided as related art for the purpose of facilitating an understanding of the disclosure. No assertion or determination is made as to whether any of the foregoing may be regarded as prior art with respect to the disclosure.

### [Detailed Description of the Invention]

### [Technical Solution]

According to an embodiment of the disclosure, an electronic device may include a housing, a circuit board, an antenna structure, or a conductive connection member. The housing may include a first housing portion or a second housing portion. The first housing portion may include an opening. The second housing portion may be configured to move with respect to the first housing portion. The circuit board may be disposed in the second housing portion. The antenna structure may be disposed in the first housing portion. The conductive connection member may be electrically connected to the circuit board and the antenna structure. The antenna structure may include a board or a first coil. The board may include a base portion or an extension portion. The base portion may be disposed in the first housing portion. The extension portion may extend from the base portion. The extension portion may be disposed to overlap the opening. The first coil may be disposed on the board. At least a portion of the first coil may overlap the opening.

According to an embodiment of the disclosure, an electronic device may include a housing, a circuit board, an antenna structure, or a conductive connection member. The housing may include a first housing portion or a second housing portion. The first housing portion may include an opening. The second housing portion may be configured to move with respect to the first housing portion. The circuit board may be disposed in the second housing portion. The antenna structure may be disposed in the first housing portion. The conductive connection member may be electrically connected to the circuit board and the antenna structure. The antenna structure may include a board or a first coil. The board may include a base portion, an extension portion, or a connection portion. The base portion may be disposed in the first housing portion. The extension portion may extend from the base portion. The extension portion may be disposed to overlap the opening. The connection portion may extend from the base portion. The connection portion may be electrically connected to the conductive connection member. The first coil may be disposed on the board. The connection portion may be at least partially disposed in the opening.

### [Brief Description of Drawings]

FIG. 1 is a block diagram of an electronic device in a network environment, according to various embodiments of the disclosure.
FIG. 2 is a view illustrating a state in which a second display area of a display is accommodated in an interior of an electronic device, according to an embodiment of the disclosure.
FIG. 3 is a view illustrating a state in which the second display area of the display is exposed to an exterior of the electronic device, according to an embodiment of the disclosure.
FIG. 4 is an exploded perspective view illustrating an electronic device according to an embodiment of the disclosure.
FIG. 5A is a cross-sectional view taken along line A-A' of FIG. 2, according to an embodiment of the disclosure.
FIG. 5B is a cross-sectional view taken along line B-B' of FIG. 3, according to an embodiment of the disclosure.
FIG. 6 is an exploded perspective view illustrating an electronic device according to an embodiment of the disclosure.
FIG. 7 is an exploded perspective view of an electronic device and an antenna structure according to an embodiment of the disclosure.
FIG. 8 is an exploded perspective view of an antenna structure according to an embodiment of the disclosure.
FIG. 9 is a front view of the antenna structure according to an embodiment of the disclosure.
FIG. 10 is a rear view of the antenna structure according to an embodiment of the disclosure.
FIG. 11 is an exploded perspective view illustrating areas of an antenna structure according to an embodiment of the disclosure.
FIG. 12 is a cross-sectional view taken along line C-C' of FIG. 2, according to an embodiment of the disclosure.
FIGS. 13A, 13B, and 13C are views illustrating an assembly process of an electronic device, according to an embodiment of the disclosure.
FIG. 14 is a rear view of an electronic device according to an embodiment of the disclosure.
FIG. 15A is a rear view of the electronic device in the slid-in state, according to an embodiment of the disclosure.
FIG. 15B is a rear view of the electronic device in the slid-out state, according to an embodiment of the disclosure.

### [Mode for Carrying out the Invention]

Hereinafter, embodiments of the disclosure will be described in detail with reference to the drawings so that those ordinarily skilled in the art to which the disclosure pertains may easily practice the disclosure. However, the disclosure may be implemented in various different forms and is not limited to the embodiments described herein. In connection with the description of the drawings, the same or similar reference numerals may be used for the same or similar elements. In addition, in the drawings and the related description, descriptions of well-known functions and configurations may be omitted for clarity and conciseness.

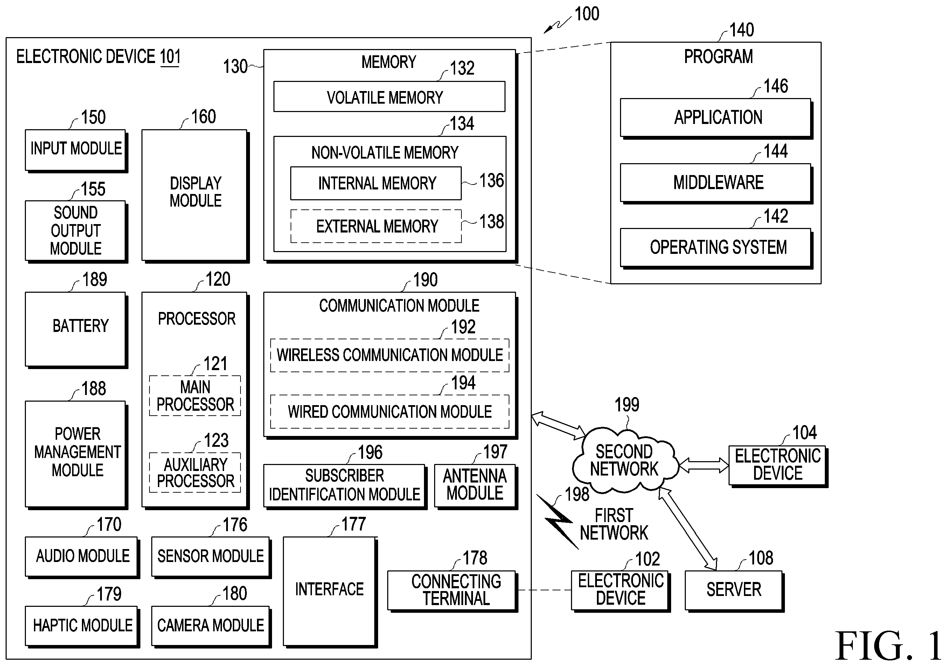

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

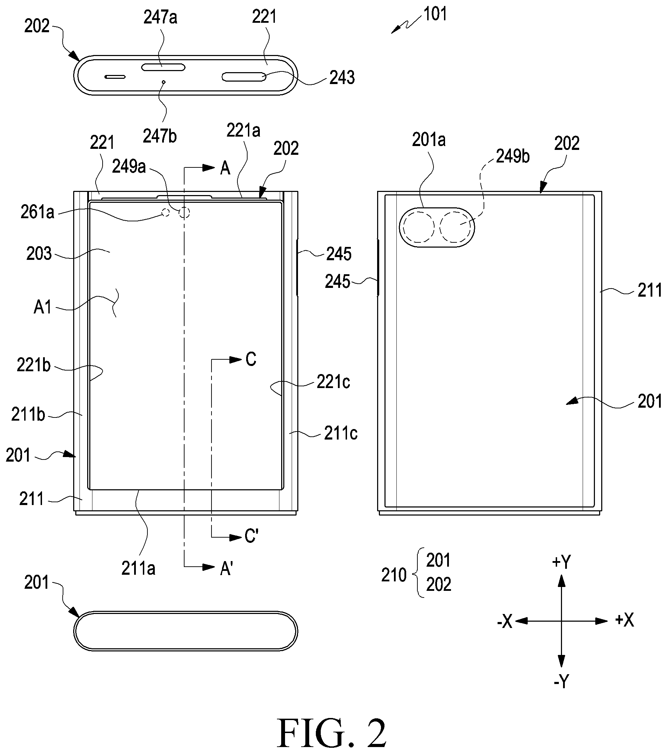

FIG. 2 is a view illustrating a state in which a second display area of a display is accommodated in an interior of an electronic device, according to an embodiment of the disclosure. The second display area extending from a first display area may be at least partially hidden in the interior of the electronic device on a plane different from the first display area.

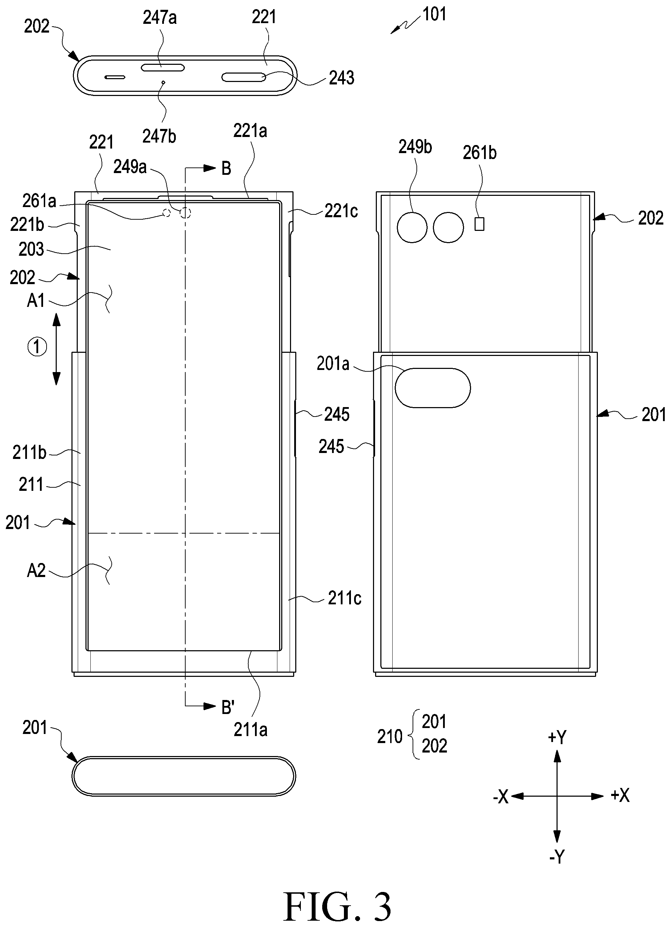

FIG. 3 is a view illustrating a state in which the second display area of the display is exposed to an exterior of the electronic device, according to an embodiment of the disclosure. The second display area extending from the first display area may be at least partially shown to the exterior of the electronic device on substantially the same plane as the first display area, based on movement of a second housing portion.

FIGS. 2 and 3 illustrate a structure in which the display 203 (e.g., a flexible display or a rollable display) extends in a length direction (e.g., the +Y direction), when viewed from the front of the electronic device 101. However, the extension direction of the display 203 is not limited to one direction (e.g., the +Y direction). For example, the extension direction of the display 203 may be changed in design to be expandable in an upward direction (the +Y direction), a rightward direction (e.g., the +X direction), a leftward direction (e.g., the -X direction), and/or a downward direction (e.g., the -Y direction).

The state illustrated in FIG. 2 may represent a state in which substantially the entirety of the second display area is hidden in the interior of the electronic device on a plane different from the first display area. For example, the state illustrated in FIG. 2 may be referred to as a slid-in state of the electronic device 101, or a state in which the second display area A2 of the display 203 is closed.

The state illustrated in FIG. 3 may represent a state in which the area of the second display area exposed to the exterior of the electronic device is maximized on substantially the same plane as the first display area. The state illustrated in FIG. 3 may be referred to as a slid-out state of the electronic device 101, or a state in which the second display area A2 of the display 203 is open.

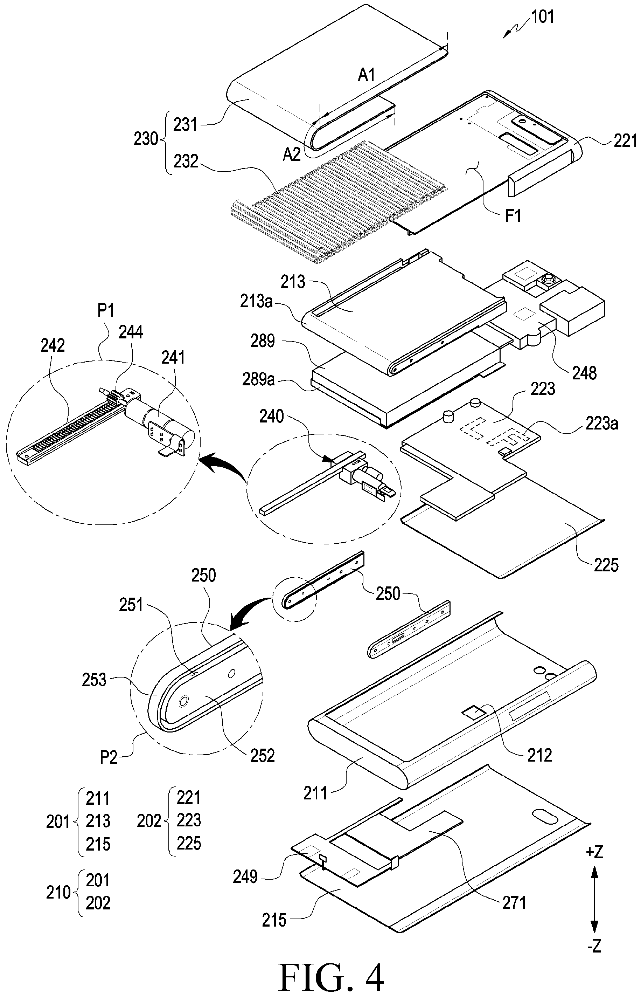

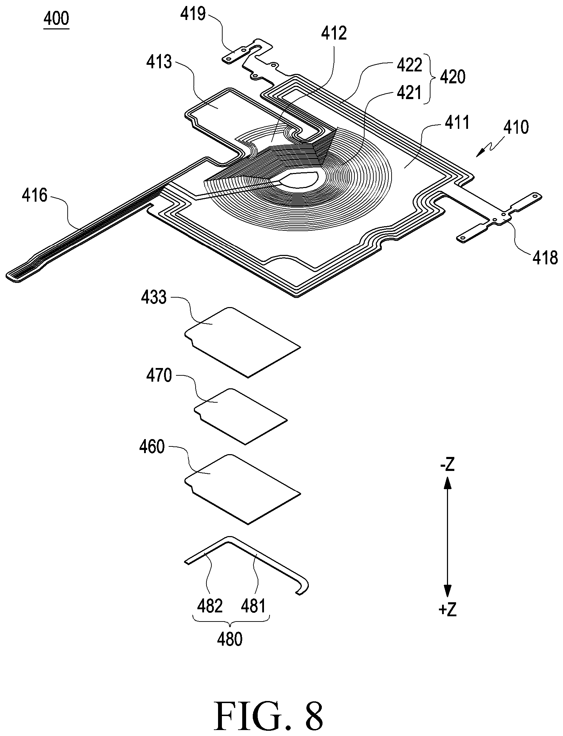

The embodiments of FIGS. 2 and 3 may be combined with the embodiment of FIG. 1 or the embodiments of FIGS. 4 to 15B.

Referring to FIGS. 2 and 3, the electronic device 101 (e.g., the electronic device 101 of FIG. 1) may include a housing 210. The housing 210 may include a first housing portion 201 and a second housing portion 202 disposed to be movable relative to the first housing portion 201. In an embodiment, the electronic device 101 may be interpreted as having a structure in which the first housing portion 201 is disposed to be slidable relative to the second housing portion 202. According to an embodiment, the second housing portion 202 may be disposed to be reciprocable by a predetermined distance with respect to the first housing portion 201 in the illustrated direction, for example, in the direction indicated by arrow ① of FIG. 3. The first housing portion 201 may be referred to as a first housing, and the second housing portion 202 may be referred to as a second housing 202.

According to an embodiment, the second housing portion 202 may be referred to as a slide portion or a slide housing, and may be movable relative to the first housing portion 201. According to an embodiment, the second housing portion 202 may accommodate various electrical and electronic components such as a circuit board or a battery. When the electronic device 101 is in the slid-in state, the second housing portion 202 may be defined as being in a retracted position, and when the electronic device 101 is in the slid-out state, the second housing portion 202 may be defined as being in an extended position. For example, the second housing portion 202 may be configured to move between the retracted position and the extended position with respect to the first housing portion 201.

According to an embodiment, the slid-in state of the electronic device 101 (or the slid-out state of the electronic device 101) may transition to the slid-out state of the electronic device 101 (or the slid-in state of the electronic device 101) based on a predefined user input. For example, the slid-in state of the electronic device 101 (or the slid-out state of the electronic device 101) may transition to the slid-out state (or the slid-in state of the electronic device 101) in response to a user input to a physical button exposed through a portion of the first housing portion 201 or a portion of the second housing portion 202. For example, the slid-in state (or the slid-out state of the electronic device 101) may transition to the slid-out state (or the slid-in state of the electronic device 101) in response to a touch input to an executable object displayed in a screen display area (e.g., the first display area A1). For example, the slid-in state (or the slid-out state of the electronic device 101) may transition to the slid-out state (or the slid-in state of the electronic device 101) in response to a touch input having a contact point on a screen display area (e.g., the first display area A1) and having a pressing intensity equal to or greater than a reference intensity. For example, the slid-in state (or the slid-out state of the electronic device 101) may transition to the slid-out state (or the slid-in state of the electronic device 101) in response to a voice input received through a microphone of the electronic device 101. For example, the slid-in state (or the slid-out state of the electronic device 101) may transition to the slid-out state (or the slid-in state of the electronic device 101) in response to an external force applied to the first housing portion 201 and/or the second housing portion 202 to move the second housing portion 202 with respect to the first housing portion 201. For example, the slid-in state (or the slid-out state of the electronic device 101) may transition to the slid-out state (or the slid-in state of the electronic device 101) in response to a user input identified in an external electronic device (e.g., earbuds or a smart watch) connected to the electronic device 101. However, a method of causing a slide-in/slide-out operation of the electronic device 101 is not limited thereto.

According to an embodiment, the first housing portion 201 may accommodate a sub-circuit board electrically connected to an actuator (e.g., a motor), a speaker, a SIM socket, and/or a main circuit board. The second housing portion 202 may accommodate a main circuit board on which electrical components such as an application processor (AP) or a communication processor (CP) are mounted. According to an embodiment, the second housing portion 202 may accommodate a sub-circuit board electrically connected to an actuator, a speaker, a SIM socket, and/or a main circuit board, and the first housing portion 201 may accommodate a main circuit board on which electrical components such as an application processor (AP) or a communication processor (CP) are mounted. According to an embodiment, the sub-circuit board and the main circuit board may be disposed in the first housing portion 201 or may be disposed in the second housing portion 202.

According to an embodiment, the first housing portion 201 may include a first cover member 211 (e.g., a main case). The first cover member 211 may include a (1-1)^{th} side wall 211a, a (1-2)^{th} side wall 211b extending from the (1-1)^{th} side wall 211a, and a (1-3)^{th} side wall 211c extending from the (1-1)^{th} side wall 211a and substantially parallel to the (1-2)^{th} side wall 211b. According to an embodiment, the (1-2)^{th} side wall 211b and the (1-3)^{th} side wall 211c may be formed substantially perpendicular to the (1-1)^{th} side wall 211a.

According to an embodiment, the (1-1)^{th} side wall 211a, the (1-2)^{th} side wall 211b, and the (1-3)^{th} side wall 211c of the first cover member 211 may be formed in a shape having one side (e.g., the front face) open so as to accommodate (or surround) at least a portion of the second housing portion 202. For example, at least a portion of the second housing portion 202 may be surrounded by the first housing portion 201 and may slide in a direction parallel to a first surface (e.g., the first surface F1 of FIG. 4), for example, in the direction of arrow ① of FIG. 3, while being guided by the first housing portion 201. According to an embodiment, the (1-1)^{th} side wall 211a, the (1-2)^{th} side wall 211b, and/or the (1-3)^{th} side wall 211c of the first cover member 211 may be integrally formed. According to an embodiment, the (1-1)^{th} side wall 211a, the (1-2)^{th} side wall 211b, and/or the (1-3)^{th} side wall 211c of the first cover member 211 may be formed as separate structures to be coupled or assembled.

According to an embodiment, the first cover member 211 may be formed to surround at least a portion of the display 203. For example, at least a portion of the display 203 may be formed to be surrounded by the (1-1)^{th} side wall 211a, the (1-2)^{th} side wall 211b, and/or the (1-3)^{th} side wall 211c of the first cover member 211.

According to an embodiment, the second housing portion 202 may include a second cover member 221 (e.g., a slide plate). The second cover member 221 may have a plate shape and may include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a (2-1)^{th} side wall 221a, a (2-2)^{th} side wall 221b extending from the (2-1)^{th} side wall 221a, and a (2-3)^{th} side wall 221c extending from the (2-1)^{th} side wall 221a and substantially parallel to the (2-2)^{th} side wall 221b. According to an embodiment, the (2-2)^{th} side wall 221b and the (2-3)^{th} side wall 221c may be formed substantially perpendicular to the (2-1)^{th} side wall 221a.

According to an embodiment, as the second housing portion 202 moves in the first direction (e.g., direction ① of FIG. 3) parallel to the (2-2)^{th} side wall 221b or the (2-3)^{th} side wall 221c, the electronic device 101 may define a slid-in state and a slid-out state. In the slid-in state of the electronic device 101, the second housing portion 202 may be positioned at a first distance from the (1-1)^{th} side wall 211a of the first housing portion 201, and in the slid-out state of the electronic device 101, the second housing portion 202 may move to be positioned at a second distance greater than the first distance from the (1-1)^{th} side wall 211a of the first housing portion 201. In an embodiment, in the slid-in state of the electronic device 101, the first housing portion 201 may be formed to surround portions of the (2-2)^{th} side wall 221b and the (2-3)^{th} side wall 221c.

According to an embodiment, the electronic device 101 may have an intermediate state between the slid-in state of FIG. 2 (e.g., a fully closed state) and the slid-out state of FIG. 3 (e.g., a fully opened state). In the intermediate state of the electronic device 101, the distance between the (1-1)^{th} side wall 211a and the (2-1)^{th} side wall 221a may be smaller than the distance between the (1-1)^{th} side wall 211a and the (2-1)^{th} side wall 221a in the fully opened state of the electronic device 101, and may be greater than the distance between the (1-1)^{th} side wall 211a and the (2-1)^{th} side wall 221a in the fully closed state of the electronic device 101. According to an embodiment, as at least a portion of the display 203 slides in the intermediate state of the electronic device 101, an area exposed to the outside may vary. For example, in the intermediate state of the electronic device 101, the ratio of the width of the display 203 (e.g., a length in the X direction) to the height of the display 203 (e.g., a length in the Y direction) and/or the distance between the (1-1)^{th} side wall 211a and the (2-1)^{th} side wall 221a may be changed based on slide movement of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., an LED device) or various sensor modules.

According to various embodiments, the display 203 may be configured such that the size of a portion visible from the front side of the housing 210 is changed based on slide movement of the second housing portion 202. According to an embodiment, the display 203 may include a first display area A1 and a second display area A2 configured to be exposed to the exterior of the electronic device 101 based on slide movement of the second housing portion 202.

According to an embodiment, as the second housing portion 202 moves between the retracted position and the extended position with respect to the first housing portion 201, the size of the display 203 shown toward an outer front face side of the electronic device 101 may vary. For example, when the second housing portion 202 is positioned at the retracted position (e.g., FIG. 2) with respect to the first housing portion 201, the size (or area) of the display 203 shown toward the outer front face side of the electronic device 101 may be substantially minimized. In addition, when the second housing portion 202 is positioned at the extended position (e.g., FIG. 3) with respect to the first housing portion 201, the size (or area) of the display 203 shown toward the outer front face side of the electronic device 101 may be substantially maximized.

According to an embodiment, the first display area A1 may be disposed on the second housing portion 202. For example, the first display area A1 may be disposed on the second cover member 221 of the second housing portion 202. According to an embodiment, the second display area A2 may extend from the first display area A1, and as the second housing portion 202 slides with respect to the first housing portion 201, the second display area A2 may be accommodated in the interior of the first housing portion 201 or may be visually exposed to the exterior of the electronic device 101. According to an embodiment, as the electronic device 101 transitions from the slid-in state to the slid-out state, the display 203 may expand in the downward direction of the electronic device 101 (e.g., the -Y direction). For example, in the slid-out state of the electronic device 101, the second display area A2 may be visually exposed below the display 203 (e.g., in the -Y direction). According to an embodiment, as the electronic device 101 transitions from the slid-in state to the slid-out state, the display 203 may expand in the upward direction of the electronic device 101 (e.g., the +Y direction). For example, in the slid-out state of the electronic device 101, the second display area A2 may be visually exposed above the display 203 (e.g., in the +Y direction).

According to an embodiment, the second display area A2 may move substantially along an area of the first housing portion 201 (e.g., the guide rail 250 of FIG. 4), and may be accommodated in a space located in the interior of the first housing portion 201 or may be exposed to the exterior of the electronic device 101. According to an embodiment, the second display area A2 may move based on slide movement of the second housing portion 202 in the first direction (e.g., the direction indicated by arrow ①). For example, while the second housing portion 202 slides, a portion of the second display area A2 may be deformed into a curved shape at a position corresponding to the curved surface 213a of the first housing portion 201.

According to an embodiment, when viewed from above the second cover member 221 (e.g., the front cover) (e.g., in the +Z direction or from the front face side of the electronic device), as the electronic device 101 transitions from the slid-in state to the slid-out state (e.g., as the second housing portion 202 slides so as to extend with respect to the first housing portion 201), the second display area A2 may gradually be exposed to the outside of the first housing portion 201 and may form substantially the same plane together with the first display area A1. According to an embodiment, the display 203 may be coupled to or disposed adjacent to a touch sensing circuit, a pressure sensor capable of measuring an intensity (pressure) of a touch, and/or a digitizer configured to detect a magnetic-field-type stylus pen. According to an embodiment, regardless of whether the electronic device 101 is in the slid-in state or the slid-out state, a portion of the exposed second display area A2 may be positioned on a portion of the first housing portion (e.g., the curved surface 213a of FIG. 4), and a portion of the second display area A2 may maintain a curved shape at a position corresponding to the curved surface 213a.

According to an embodiment, the key input device 245 may be located in an area of the housing 210 (e.g., the first housing portion 201 and/or the second housing portion 202). Depending on an external appearance and a use state, the illustrated key input device 245 may be omitted, or the electronic device 101 may be designed to include additional key input device(s). According to an embodiment, the electronic device 101 may include a key input device that is not illustrated, for example, a home key button or a touch pad disposed around the home key button. According to an embodiment, at least a portion of the key input device 245 may be disposed on the (1-1)^{th} side wall 211a, the (1-2)^{th} side wall 211b, and/or the (1-3)^{th} side wall 211c of the first housing portion 201. According to an embodiment, at least a portion of the key input device 245 may be disposed on the (2-1)^{th} side wall 221a, the (2-2)^{th} side wall 221b, and/or the (2-3)^{th} side wall 221c of the second housing portion 202.

According to an embodiment, the connector hole 243 may be omitted, and may accommodate a connector (e.g., a USB connector) configured to transmit and receive power and/or data to and from an external electronic device. According to an embodiment, the electronic device 101 may include a plurality of connector holes 243, and some of the plurality of connector holes 243 may function as connector holes configured to transmit and receive an audio signal to and from an external electronic device. In the illustrated embodiment, the connector hole 243 is positioned in the second housing portion 202, but the disclosure is not limited thereto, and the connector hole 243 or a connector hole that is not illustrated may be positioned in the first housing portion 201.

According to an embodiment, the audio modules 247a and 247b may include at least one speaker hole 247a or at least one microphone hole 247b. One of the speaker holes 247a may be provided as a receiver hole for a voice call, and another one of the speaker holes 247a may be provided as an external speaker hole. The electronic device 101 may include a microphone for acquiring sound, and the microphone may acquire sound outside the electronic device 101 through the microphone hole 247b. According to an embodiment, the electronic device 101 may include a plurality of microphones to detect a direction of sound. According to an embodiment, the electronic device 101 may include an audio module in which the speaker hole 247a and the microphone hole 247b are implemented as a single hole, or may include a speaker without the speaker hole 247a (e.g., a piezo speaker). According to an embodiment, the speaker hole 247a and the microphone hole 247b may be positioned in the first housing portion 201 and/or the second housing portion 202.

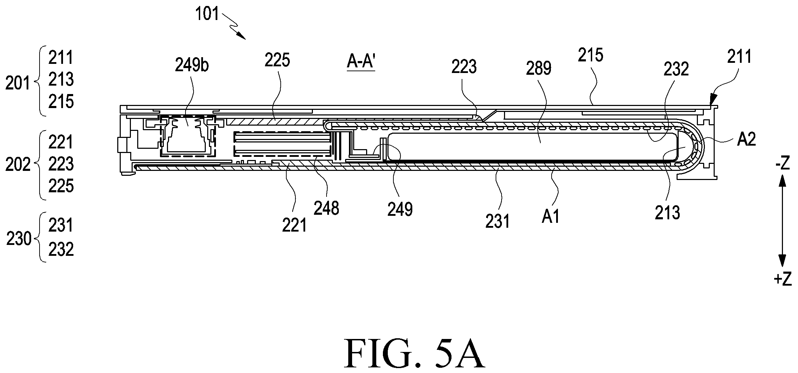

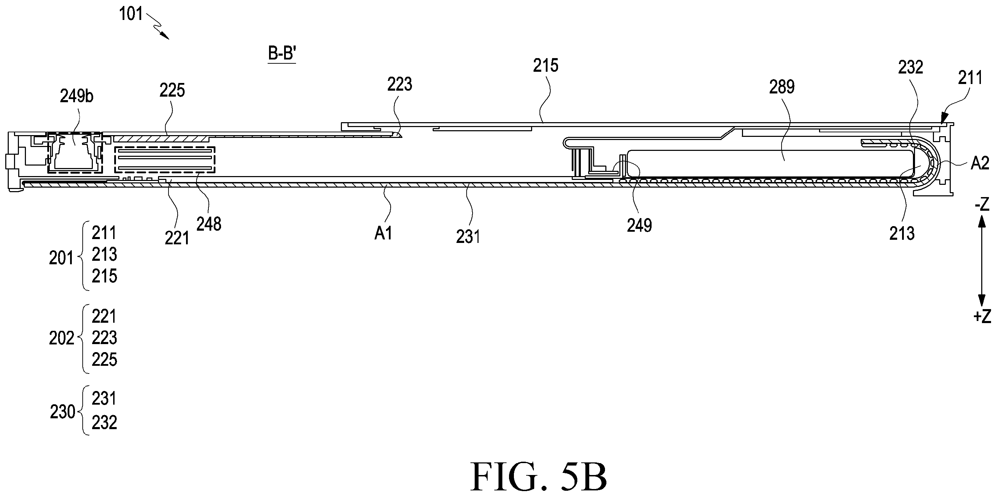

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera, and may measure a distance to a subject by including an infrared projector and/or an infrared receiver. The camera modules 249a and 249b may include one or more lenses, an image sensor, and/or an image signal processor. The first camera module 249a may be disposed to be oriented in the same direction as the display 203. For example, the first camera module 249a may be disposed around the first display area A1 or in an area overlapping the display 203, and, when disposed in the area overlapping the display 203, may capture a subject through the display 203. According to an embodiment, the first camera module 249a may not be visually exposed in a screen display area (e.g., the first display area A1), and may include an under-display camera (UDC). According to an embodiment, the second camera module 249b may capture a subject in a direction opposite to the first display area A1. According to an embodiment, the first camera module 249a and/or the second camera module 249b may be disposed on the second housing portion 202. According to an embodiment, a plurality of second camera modules 249b may be formed and provide various arrangements. For example, the plurality of second camera modules 249b may be arranged along the width direction (the X-axis direction), which is substantially perpendicular to the slide movement direction of the electronic device 101 (e.g., the Y-axis direction). As another example, the plurality of second camera modules 249b may be arranged along the slide movement direction of the electronic device 101 (e.g., the Y-axis direction). As another example, the plurality of second camera modules 249b may be arranged along N * M rows and columns like a matrix.

According to an embodiment, the second camera module 249b may not be visually exposed to the exterior of the electronic device 101 in the slid-in state of the electronic device 101, and may capture the exterior of the electronic device 101 in the slid-out state of the electronic device 101. According to an embodiment, the second camera module 249b may capture the exterior of the electronic device 101 in the slid-in state and/or the slid-out state of the electronic device 101. For example, at least a portion of the housing 210 (e.g., the first rear surface plate 215 and/or the second rear surface plate 225 of FIG. 4) may be substantially transparent, and the second camera module 249b may capture the exterior of the electronic device 101 through the first rear surface plate 215 and/or the second rear surface plate 225. According to an embodiment, the second camera module 249b may be visually exposed to the exterior of the electronic device 101 in the slid-in state and the slid-out state of the electronic device 101, and may capture the exterior. For example, the first housing portion 201 (e.g., the first rear surface plate 215 of FIG. 4) may include an opening 201a for the second camera module 249b.

According to an embodiment, an indicator (not illustrated) of the electronic device 101 may be disposed in the first housing portion 201 or the second housing portion 202, and may provide state information of the electronic device 101 as a visual signal by including a light-emitting diode. The sensor modules 261a and 261b of the electronic device 101 may generate an electrical signal or a data value corresponding to an operating state inside the electronic device 101 or an environmental state outside the electronic device 101. The sensor modules 261a and 261b may include a proximity sensor, a fingerprint sensor, and/or a biometric sensor (e.g., an iris/face recognition sensor or an HRM sensor). In an embodiment, the sensor modules 261a and 261b may further include at least one of a gesture sensor, a gyro sensor, a barometric sensor, a magnetic sensor, an acceleration sensor, a grip sensor, a color sensor, an IR (infrared) sensor, a temperature sensor, a humidity sensor, or an illuminance sensor. According to an embodiment, the sensor modules 261a and 261b may be disposed in the first housing portion 201 and/or the second housing portion 202. For example, the sensor modules 261a and 261b may include a first sensor module 261a disposed on the front face of the electronic device 101 (e.g., a proximity sensor or an illuminance sensor) and/or a second sensor module 261b disposed on the rear face of the electronic device 101 (e.g., an HRM (heart rate monitoring) sensor).

FIG. 4 is an exploded perspective view illustrating an electronic device according to an embodiment of the disclosure.

FIG. 5A is a cross-sectional view taken along line A-A' of FIG. 2, according to an embodiment of the disclosure.

FIG. 5B is a cross-sectional view taken along line B-B' of FIG. 3, according to an embodiment of the disclosure.

Referring to FIG. 4, FIG. 5A, and/or FIG. 5B, the electronic device 101 (e.g., the electronic device 101 of FIGS. 1 to 3) may include a housing 210, a first housing portion 201, a second housing portion 202, a display assembly 230, and a driving structure 240. The configurations of the first housing portion 201, the second housing portion 202, and the display assembly 230 of FIG. 4, FIG. 5A, and/or FIG. 5B may be wholly or partially identical to the configurations of the housing 210, the first housing portion 201, the second housing portion 202, and the display 203 of FIG. 2 and/or FIG. 3.

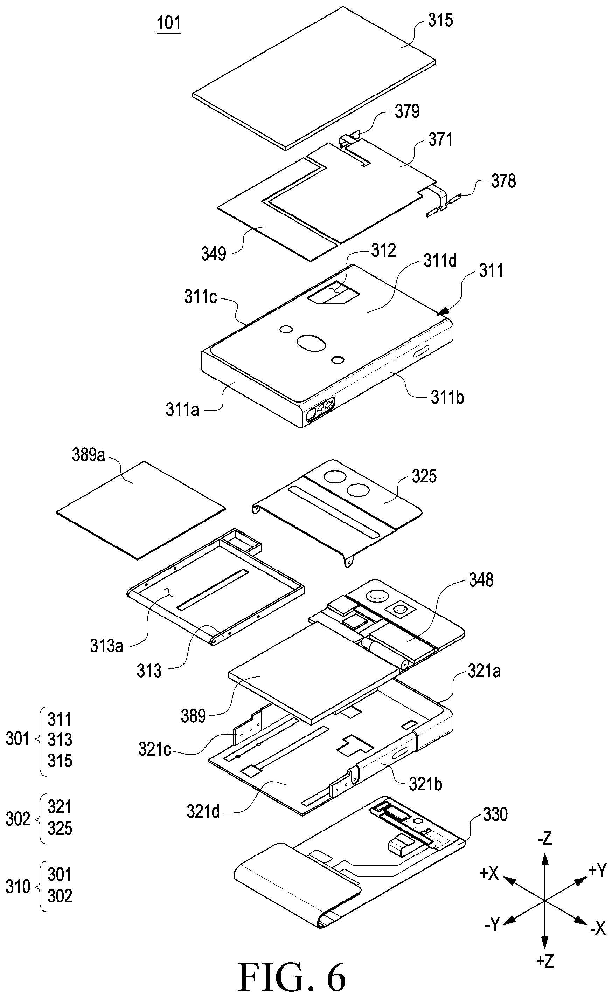

The embodiments of FIGS. 4 to 5B may be combined with the embodiments of FIGS. 1 to 3 or the embodiments of FIGS. 6 to 15B.

According to an embodiment, the housing 210 may include a first housing portion 201 or a second housing portion 202 movably coupled with respect to the first housing portion 201.

According to an embodiment, the first housing portion 201 may include a first cover member 211 (e.g., the first cover member 211 of FIGS. 2 and 3), a frame 213, and a first rear surface plate 215.

According to an embodiment, the first cover member 211 may accommodate at least a portion of the frame 213, and may accommodate a component (e.g., a battery 289) positioned in the frame 213. According to an embodiment, the first cover member 211 may be configured to surround at least a portion of the second housing portion 202. According to an embodiment, the first cover member 211 may protect components (e.g., the second circuit board 249 and the frame 213) positioned in the first housing portion 201 from an external impact. According to an embodiment, the second circuit board 249 electrically connected to an electrical component (e.g., an actuator, a speaker, a SIM socket, and/or the first circuit board 248) may be connected to the first cover member 211.

According to an embodiment, an outer surface of the first cover member 211 (e.g., the surface oriented in the -Z direction of FIG. 4) may be covered, at least partially, by the first rear surface plate 215. For example, the outer surface of the first cover member 211 may be disposed to face the first rear surface plate 215. An antenna member 271 may be disposed on the outer surface of the first cover member 211. The antenna member 271 may be disposed between the first cover member 211 and the first rear surface plate 215.

According to an embodiment, the frame 213 and/or the battery 289 may be disposed on an inner surface of the first cover member 211 (e.g., the surface oriented in the +Z direction of FIG. 4). The inner surface of the first cover member 211 (e.g., the surface oriented in the +Z direction of FIG. 4) may face the frame 213 and/or the battery 289.

According to an embodiment, as the antenna member 271 is disposed in the first housing portion 201 and/or the first cover member 211 and the first circuit board 248 is disposed in the second housing portion 202 and/or the second cover member 221, the relative position of the first circuit board 248 with respect to the antenna member 271 may vary. For example, when the second housing portion 202 moves relative to the first housing portion 201, the first circuit board 248 may move relative to the antenna member 271.

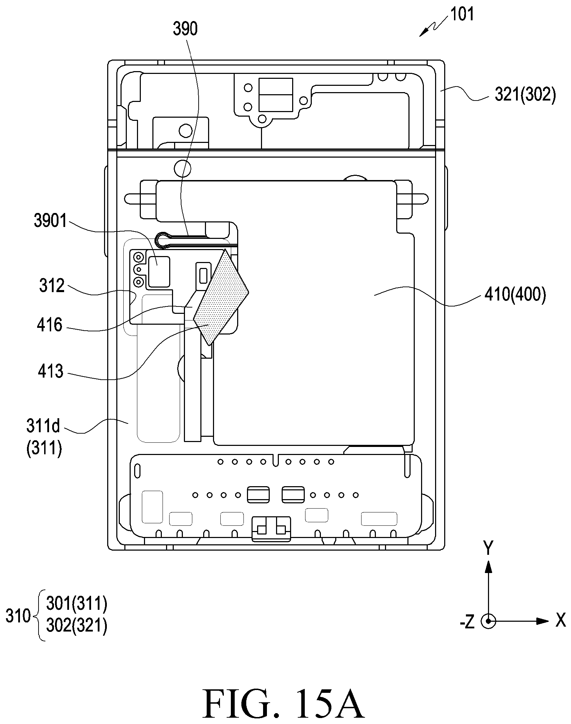

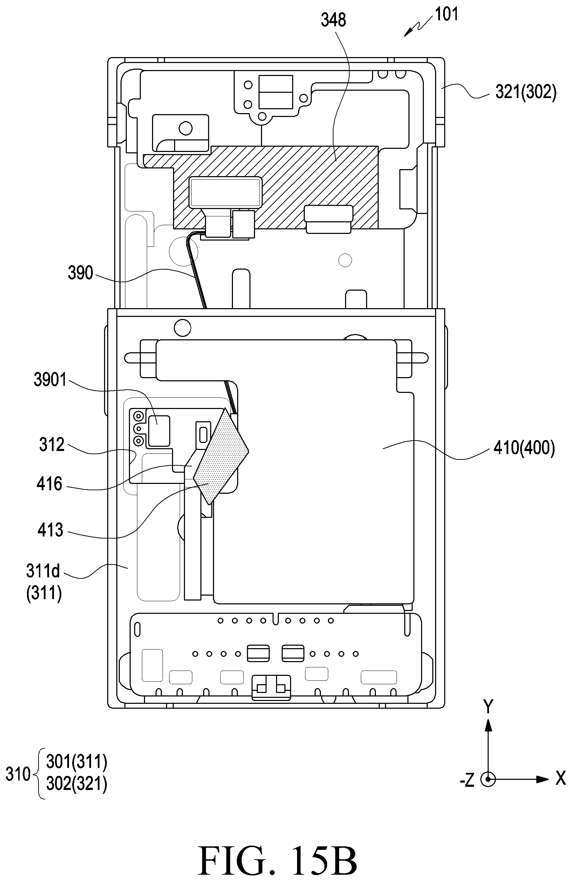

According to an embodiment, the electronic device 101 may include a conductive connection member (e.g., the conductive connection member 390 of FIGS. 15A and 15B) (e.g., an FPCB) electrically and/or physically connected to the antenna member 271 and the first circuit board 248.

According to an embodiment, the conductive connection member may be electrically and/or physically connected to the antenna member 271 and the first circuit board 248, the relative positions of which with respect to each other may vary.

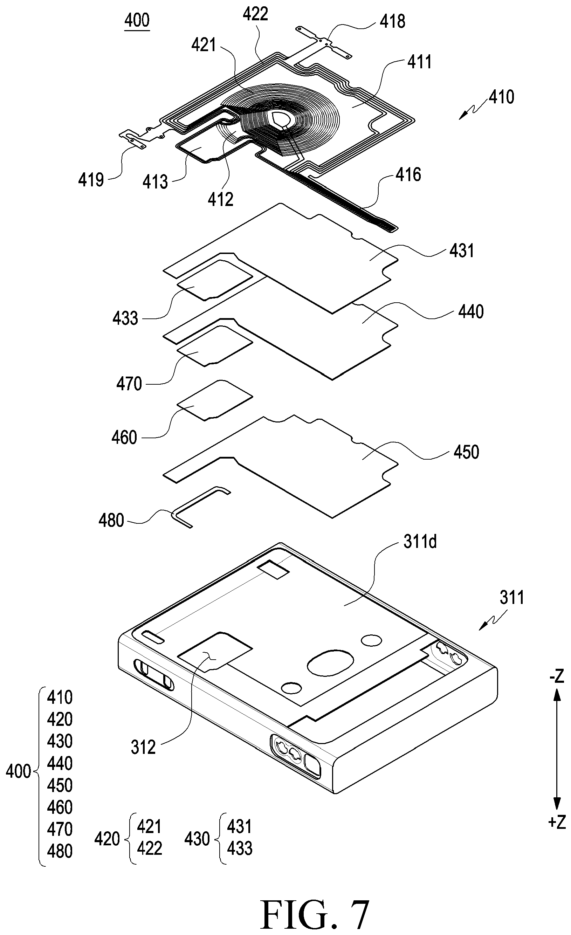

According to an embodiment, the first cover member 211 may include an opening 212. The opening 212 may include a hole passing through the outer surface and the inner surface of the first cover member 211. At least a portion of the antenna member 271 may be disposed in the opening 212. For example, at least a portion of a connection portion of the antenna member 271 (e.g., the connection portion 416 of FIG. 7) may be disposed in the opening 212. At least a portion of the connection portion may be disposed in the opening 212, and the connection portion may be electrically and/or physically connected to a connector of the conductive connection member.

According to an embodiment, the frame 213 may be connected to the first cover member 211. For example, the frame 213 may be connected to the first cover member 211, and the second housing portion 202 may move relative to the first cover member 211 and/or the frame 213. According to an embodiment, the frame 213 may accommodate a battery 289. For example, the frame 213 may include a groove configured to accommodate the battery 289. The frame 213 may be connected to a battery cover 289a and may surround at least a portion of the battery 289 together with the battery cover 289a. According to an embodiment, the frame 213 may include a curved portion 213a facing the display assembly 230.

According to an embodiment, the first rear surface plate 215 may substantially form at least a portion of an external appearance of the first housing portion 201 or the electronic device 101. For example, the first rear surface plate 215 may be coupled to the outer surface of the first cover member 211. According to an embodiment, the first rear surface plate 215 may provide a decorative effect in the external appearance of the electronic device 101. The first rear surface plate 215 may be made using at least one of metal, glass, synthetic resin, or ceramic.

According to an embodiment, the second housing portion 202 may include a second cover member 221 (e.g., the second cover member 221 of FIGS. 2 and 3), a rear cover 223, and a second rear surface plate 225.

According to an embodiment, the second cover member 221 may be connected to the first housing portion 201 through a guide rail 250, and may linearly reciprocate in one direction (e.g., the direction of arrow ① of FIG. 3) while being guided by the guide rail 250.

According to various embodiments, the second cover member 221 may support at least a portion of the display 231. For example, the second cover member 221 may include a first surface F1, and the first display area A1 of the display 231 may be located substantially on the first surface F1 and may be maintained in a flat plate shape. According to an embodiment, the second cover member 221 may be formed of a metal material and/or a non-metal material (e.g., a polymer material). According to an embodiment, the first circuit board 248 accommodating electronic components (e.g., the processor 120 and/or the memory 130 of FIG. 1) may be connected to the second cover member 221. According to an embodiment, the second cover member 221 may protect components (e.g., the first circuit board 248 and the rear cover 223) positioned in the second housing portion 202 from an external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) configured to communicate with an external electronic device. For example, when the rear cover 223 is formed as an injection-molded article of a dielectric material (e.g., an antenna carrier), the at least one antenna element 223a may be disposed on an outer surface of the rear cover 223 (e.g., the surface oriented in the -Z-axis direction). For example, the at least one antenna element 223a may include a laser direct structuring (LDS) antenna pattern formed on the outer surface of the rear cover 223. For example, the at least one antenna element 223a may be formed to be embedded during injection molding of the rear cover 223. For example, the at least one antenna element 223a may be configured to transmit or receive a wireless signal in a predetermined frequency band (e.g., a legacy band) by being electrically connected to a wireless communication circuit (e.g., the wireless communication module 192 of FIG. 1) disposed on the first circuit board 248.

According to an embodiment, the second rear surface plate 225 may substantially form at least a portion of an external appearance of the second housing portion 202 or the electronic device 101. For example, the second rear surface plate 225 may be coupled to the outer surface of the second cover member 221. According to an embodiment, the second rear surface plate 225 may provide a decorative effect in the external appearance of the electronic device 101. The second rear surface plate 225 may be made using at least one of metal, glass, synthetic resin, or ceramic.

According to various embodiments, the display assembly 230 may include a display 231 (e.g., the display 203 of FIG. 2 and/or FIG. 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body, and the second display area A2 may be supported by a bendable structure. For example, the first display area A1 may be supported by the first surface F1 of the second cover member 221 or a plate not illustrated. The second display area A2 may be supported by the multi-bar structure 232.

According to an embodiment, the multi-bar structure 232 may be connected or attached to at least a portion of the display 231 (e.g., the second display area A2). According to an embodiment, as the second housing portion 202 slides, the multi-bar structure 232 may move with respect to the first housing portion 201. In the slid-in state of the electronic device 101 (e.g., FIG. 2), the multi-bar structure 232 may be mostly accommodated in the interior of the first housing portion 201, and may be positioned between the first cover member 211 and the second cover member 221. According to an embodiment, at least a portion of the multi-bar structure 232 may move corresponding to the curved surface 213a positioned at an edge of the frame 213. According to an embodiment, the multi-bar structure 232 may be referred to as a display support member or a support structure, and may have a form of one bendable plate.

According to an embodiment, the driving structure 240 may relatively move the second housing portion 202 with respect to the first housing portion 201. For example, the driving structure 240 may include an actuator 241 configured to generate a driving force for slide movement of the second housing portion 202 with respect to the first housing portion 201. The driving structure 240 may include a gear 244 (e.g., a pinion) connected to the actuator 241 and a rack 242 configured to be engaged with the gear. Referring to FIG. 4, components of the driving structure 240 (e.g., the actuator 241, the rack 242, and the gear 244) inverted (e.g., oriented in the -Z axis) are shown within the circle P1.

According to an embodiment, a housing in which the rack 242 is positioned and a housing in which the actuator 241 is positioned may be different from each other. According to an embodiment, the actuator 241 may be connected to the first housing portion 201, and the rack 242 may be connected to the second housing portion 202. According to an embodiment, the actuator 241 may be connected to the second housing portion 202, and the rack 242 may be connected to the first housing portion 201.

According to an embodiment, the actuator 241 may be controlled by a processor (e.g., the processor 120 of FIG. 1). For example, the processor 120 may include an actuator driver circuit and may be configured to transmit, to the actuator 241, a pulse width modulation (PWM) signal for controlling a speed of the actuator 241 and/or a torque of the actuator 241. According to an embodiment, the actuator 241 may be electrically connected, using a flexible printed circuit board, to a processor (e.g., the processor 120 of FIG. 1) positioned on a circuit board (e.g., the first circuit board 248 of FIG. 4).

According to an embodiment, the second housing portion 202 may accommodate a first circuit board 248 (e.g., a main circuit board). According to an embodiment, a processor, memory, and/or an interface may be mounted on the first circuit board 248. The processor may include, for example, one or more of a central processing unit, an application processor, a graphics processing unit, an image signal processor, a sensor hub processor, or a communication processor. According to various embodiments, the first circuit board 248 may include a radio frequency cable (FRC) of a flexible printed circuit board type. The first circuit board 248 may be disposed on at least a portion of the second cover member 221 and may be electrically connected to an antenna module (e.g., the antenna module 197 of FIG. 1) and a communication module (e.g., the communication module 190 of FIG. 1).

According to an embodiment, the first circuit board 248 may move together with the second housing portion 202 when the second housing portion 202 moves relative to the first housing portion 201.

According to an embodiment, the memory may include, for example, volatile memory or non-volatile memory.

According to an embodiment, the interface may include, for example, a high-definition multimedia interface (HDMI), a universal serial bus (USB) interface, an SD card interface, and/or an audio interface. The interface may, for example, electrically or physically connect the electronic device 101 to an external electronic device, and may include a USB connector, an SD card/an MMC connector, or an audio connector.

According to an embodiment, the electronic device 101 may include a second circuit board 249 (e.g., a sub-circuit board) spaced apart from the first circuit board 248 (e.g., a main circuit board) in the first housing portion 201. The second circuit board 249 may be electrically connected to the first circuit board 248 through a flexible board. The second circuit board 249 may be electrically connected to electrical components disposed in an end area of the electronic device 101, such as the battery 289 or the speaker and/or the SIM socket, so as to transmit signals and power. According to an embodiment, the second circuit board 249 may accommodate the antenna member 271 (e.g., a coil) or may be connected to the antenna member 271. The antenna member 271 may include a multi-function coil (MFC) antenna including a wireless charging antenna for a wireless charging function, a near-field communication (NFC) antenna for an NFC function, and/or a magnetic secure transmission (MST) antenna for an electronic payment function. For example, the battery 289 may receive power from an external electronic device using the antenna member 271 for wireless charging. As another example, the battery 289 may transmit power to an external electronic device using the antenna member 271 for wireless charging.

According to an embodiment, the battery 289 may be a device for supplying power to at least one component of the electronic device 101 and may include a non-rechargeable primary battery, a rechargeable secondary battery, or a fuel cell. The battery 289 may be integrally disposed inside the electronic device 101, or may be detachably disposed with respect to the electronic device 101. According to an embodiment, the battery 289 may be formed as a single integrated battery or may include a plurality of detachable batteries. According to an embodiment, the battery 289 may be positioned in the frame 213. For example, the battery 289 may be surrounded by the frame 213 and the battery cover 289a. According to an embodiment, the multi-bar structure 232 may be positioned in the second housing portion 202 and may slide together with the second housing portion 202.

According to an embodiment, the guide rail 250 may guide movement of the multi-bar structure 232. For example, the multi-bar structure 232 may slide along a slit 251 formed in the guide rail 250. According to an embodiment, the guide rail 250 may be connected to the first housing portion 201. For example, the guide rail 250 may be connected to the first cover member 211 and/or the frame 213. According to an embodiment, the slit 251 may be referred to as a groove or a recess formed in an inner side surface of the guide rail 250. Referring to FIG. 4, an enlarged view of the guide rail 250 is shown within circle P2.

According to an embodiment, the guide rail 250 may provide a force to the multi-bar structure 232 based on driving of the actuator 241.

According to an embodiment, when the electronic device 101 transitions from the slid-in state to the slid-out state, at least a portion of the second housing portion 202 may slide so as to be exposed to the outside from the first housing portion 201 through the driving of the actuator 241. For example, the gear 244 may rotate in a first rotation direction based on the driving of the actuator 241. As the rack 242 is fixed on the second cover member 221 of the second housing portion 202, the second housing portion 202 may slide so as to be exposed to the outside of the first housing portion 201 based on slide movement of the rack 242 toward the slid-out direction.

According to an embodiment, when the electronic device 101 transitions from the slid-in state to the slid-out state, an inner portion 252 of the guide rail 250 may provide a force to the multi-bar structure 232. The multi-bar structure 232 provided with the force may move along the slit 251 of the guide rail 250, and the second housing portion 202 may slide so as to extend with respect to the first housing portion 201. At least a portion of the display assembly 230 accommodated between the first cover member 211 and the frame 213 may expand forward.

According to an embodiment, when the electronic device 101 transitions from the slid-out state to the slid-in state, at least a portion of the second housing portion 202 may slide so as to be inserted into an inner side of the first housing portion 201 through driving of the actuator 241. For example, the gear 244 may rotate in a second rotation direction opposite to the first rotation direction based on the driving of the actuator 241. As the rack 242 is fixed on the second cover member 221 of the second housing portion 202, the second housing portion 202 may slide so as to enter the inner side of the first housing portion 201 based on slide movement of the rack 242 toward the slid-in direction.

According to an embodiment, when the electronic device 101 transitions from the slid-out state to the slid-in state, an outer portion 253 of the guide rail 250 may provide a force to the bent multi-bar structure 232. The multi-bar structure 232 provided with the force may move along the slit 251 of the guide rail 250, and at least a portion of the second housing portion 202 may slide so as to be accommodated in the first housing portion 201. At least a portion of the display assembly 230 may be accommodated between the first cover member 211 and the frame 213.

According to an embodiment, the electronic device 101 may be configured to stop at a predetermined intermediate state between the slid-in state and the slid-out state by controlling the driving of the actuator 241 (a free-stop function). According to an embodiment, in a state in which no driving force is provided to the actuator 241, the electronic device 101 may transition to the slid-in state, the intermediate state, or the slid-out state through a user manipulation.

Referring to FIG. 5A, in the slid-in state of the electronic device 101, at least a portion of the second housing portion 202 may be disposed to be accommodated in the first housing portion 201. As the second housing portion 202 is disposed to be accommodated in the first housing portion 201, the overall size of the electronic device 101 may decrease. According to an embodiment, when the second housing portion 202 is accommodated in the first housing portion 201, the size of the display 231 visually exposed may be minimized. For example, when the second housing portion 202 is fully accommodated in the first housing portion 201, the first display area A1 of the display 231 may be visually exposed, and at least a portion of the second display area A2 (e.g., a portion oriented in the -Z axis) may be disposed between the battery 289 and the first rear surface plate 215.

Referring to FIG. 5B, when the electronic device 101 is in the slid-out state, at least a portion of the second housing portion 202 may protrude from the first housing portion 201. As the second housing portion 202 protrudes from the first housing portion 201, the overall size of the electronic device 101 may increase. According to an embodiment, when the second housing portion 202 protrudes from the first housing portion 201, at least a portion of the second display area A2 of the display 231 may be visually exposed to the exterior of the electronic device 101 together with the first display area A1.

The embodiment of FIG. 6 may be combined with the embodiment of FIG. 1 or the embodiments of FIGS. 7 to 15B.

Referring to FIG. 6, the electronic device 101 (e.g., the electronic device 101 of FIGS. 2 to 5B) may include a housing 310, a first housing portion 301, a second housing portion 302, a display 330, a first circuit board 348, a second circuit board 349, an antenna structure 371, or a battery 389.

The configurations of the housing 310, the first housing portion 301, the second housing portion 302, the first circuit board 348, the second circuit board 349, the antenna structure 371, or the battery 389 of FIG. 6 may include the configurations of the housing 210, the first housing portion 201, the second housing portion 202, the first circuit board 248, the second circuit board 249, the antenna member 271, or the battery 289 of FIGS. 4 to 5B. The configuration of the display 330 of FIG. 6 may be partially or wholly identical to the configuration of the display assembly 230 or the display 231 of FIGS. 4 to 5B.

According to an embodiment, the housing 310 may include a first housing portion 301. The housing 310 may include a second housing portion 302 configured to move between a retracted position (e.g., FIG. 2 or FIG. 5A) and an extended position (e.g., FIG. 3 or FIG. 5B) with respect to the first housing portion 301.

According to an embodiment, the first housing portion 301 may include a first cover member 311 (e.g., the first cover member 211 of FIGS. 4 to 5B), a frame 313 (e.g., the frame 313 of FIGS. 4 to 5B), or a first rear surface plate 315 (e.g., the first rear surface plate 315 of FIGS. 4 to 5B).

According to an embodiment, the first cover member 311 may include a (1-1)^{th} side wall 311a (e.g., the (1-1)^{th} side wall 211a of FIGS. 2 to 3), a (1-2)^{th} side wall 311b (e.g., the (1-2)^{th} side wall 211b of FIGS. 2 to 3), or a (1-3)^{th} side wall 311c (e.g., the (1-3)^{th} side wall 311c of FIGS. 2 to 3).

According to an embodiment, the first cover member 311 may include a first plate 311d. The first plate 311d may be connected to first side walls 311a, 311b, and 311c. The first plate 311d may be defined and/or referred to as a first support member, a first bracket, a first plane, a first cover, a first front surface plate, or a first mid plate.

According to an embodiment, the frame 313 or the battery 389 may be accommodated in a space of the first cover member 311 defined by the first side walls 311a, 311b, and 311c and the first plate 311d. The space of the first cover member 311 may be formed to surround at least a portion of the second housing portion 302.

According to an embodiment, the first plate 311d may include an outer surface (e.g., the surface oriented in the -Z direction of FIG. 6) or an inner surface (e.g., the surface oriented in the +Z direction of FIG. 6).

According to an embodiment, the outer surface of the first plate 311d (e.g., the surface oriented in the -Z direction of FIG. 6) may be covered by the first rear surface plate 315. The antenna structure 371 or the second circuit board 349 may be disposed on the outer surface of the first plate 311d (e.g., the surface oriented in the -Z direction of FIG. 6). The antenna structure 371 or the second circuit board 249 may be disposed between the outer surface of the first plate 311d and the first rear surface plate 315.

According to an embodiment, the frame 313 or the battery 389 may be disposed on the inner surface of the first plate 311d (e.g., the surface oriented in the +Z direction of FIG. 6).

According to an embodiment, the first cover member 311 may include an opening 312 (e.g., the opening 212 of FIG. 4). The opening 312 may include a hole penetrating at least a portion of the first plate 311d.

According to an embodiment, the opening 312 may overlap at least a portion of the antenna structure 371 in the thickness direction of the electronic device 101 (e.g., the Z-axis direction of FIG. 6). The thickness direction of the electronic device 101 may be defined and/or referred to as a second direction (e.g., the Z-axis direction of FIG. 6). The second direction may be a direction different from a first direction in which the second housing portion 302 moves with respect to the first housing portion 301 (e.g., the Y-axis direction of FIGS. 2 to 6). The second direction may be substantially perpendicular to the first direction.

According to an embodiment, the frame 313 may include a recess 313a capable of accommodating the battery 389. The frame 313 may be connected to a battery cover 389a (e.g., the battery cover 289a of FIG. 4), and may surround at least a portion of the battery 389 together with the battery cover 389a.

According to an embodiment, the second housing portion 302 may include a second cover member 321 (e.g., the second cover member 221 of FIGS. 4 to 5B) or a second rear surface plate 325 (e.g., the second rear surface plate 225 of FIGS. 4 to 5B).

According to an embodiment, the second cover member 321 may include a (2-1)^{th} side wall 321a (e.g., the (2-1)^{th} side wall 221a of FIGS. 2 to 3), a (2-2)^{th} side wall 321b (e.g., the (2-2)^{th} side wall 221b of FIGS. 2 to 3), or a (2-3)^{th} side wall 321c (e.g., the (2-3)^{th} side wall 321c of FIGS. 2 to 3).

According to an embodiment, the second cover member 321 may include a second plate 321d. The second plate 321d may be connected to the second side walls 321a, 321b, and 321c. The second plate 321d may be defined and/or referred to as a second support member, a second bracket, a second plane, a second cover, a second front surface plate, or a second mid plate.

According to an embodiment, the second plate 321d may include an outer surface (e.g., the surface oriented in the +Z direction of FIG. 6) or an inner surface (e.g., the surface oriented in the -Z direction of FIG. 6).

According to an embodiment, the outer surface of the second plate 321d (e.g., the surface oriented in the +Z direction of FIG. 6) may face away from the outer surface of the first plate 311d (e.g., the surface oriented in the -Z direction of FIG. 6).

According to an embodiment, the inner surface of the second plate 321d (e.g., the surface oriented in the -Z direction of FIG. 6) may be covered by the second rear surface plate 325. The first circuit board 348 may be disposed on the inner surface of the second plate 321d (e.g., the surface oriented in the -Z direction of FIG. 6). The first circuit board 348 may be at least partially disposed between the inner surface of the second plate 311d and the second rear surface plate 325. The first circuit board 348 may be referred to as a main circuit board. The first circuit board 348 may move together with the second housing portion 302 when the second housing portion 302 moves with respect to the first housing portion 301.

According to an embodiment, at least a portion of the display 330 may be disposed on the outer surface of the second plate 321d (e.g., the surface oriented in the +Z direction of FIG. 6). For example, the first display area of the display 330 (e.g., the first display area A1 of FIG. 4) may be disposed on the outer surface of the second plate 321d (e.g., the surface oriented in the +Z direction of FIG. 6).

According to an embodiment, when the electronic device 101 and/or the housing 310 is in the closed state or the slid-in state (e.g., FIG. 2 or FIG. 5A), the battery 389 may be positioned between the inner surface of the first plate 311d (e.g., the surface oriented in the +Z direction of FIG. 6) and the inner surface of the second plate 321d (e.g., the surface oriented in the -Z direction of FIG. 6) in the second direction (e.g., the Z-axis direction of FIG. 6).

According to an embodiment, when the electronic device 101 and/or the housing 310 is in the closed state or the slid-in state (e.g., FIG. 2 or FIG. 5A), the first circuit board 348 may be positioned between the inner surface of the first plate 311d and the inner surface of the second plate 321d in the second direction (e.g., the Z-axis direction of FIG. 6). When the electronic device 101 and/or the housing 310 is in the open state or the slid-out state (e.g., FIG. 3 or FIG. 5B), the first circuit board 348 may not be positioned between the inner surface of the first plate 311d and the inner surface of the second plate 321d in the second direction (e.g., the Z-axis direction of FIG. 6).

According to an embodiment, the display 330 may be supported by the housing 310.

According to an embodiment, at least a portion of the display 330 (e.g., the first display area A1 of FIGS. 4 to 5B) may be supported by the outer surface of the second plate 321d (e.g., the surface oriented in the -Z direction of FIG. 6). Another portion of the display 330 (e.g., the second display area A2 of FIGS. 4 to 5B) may extend from the first display area, and, as the second housing portion 302 slides with respect to the first housing portion 301, may be accommodated in the interior of the first housing portion 301 or may be visually exposed to the exterior of the electronic device 101.

According to an embodiment, the antenna structure 371 may include a multi-function coil (MFC) antenna. For example, the antenna structure 371 may include a wireless charging antenna, a near-field communication (NFC) antenna, and/or a magnetic secure transmission (MST) antenna. For example, the antenna structure 371 may be configured to wirelessly transmit and receive power for charging the battery 389 or to perform short-range communication with an external electronic device. The antenna structure 371 may be defined and/or referred to as an antenna member, an antenna module, an antenna board, or an antenna. The battery 389 may be electrically connected to the first circuit board 348. The antenna structure 371 may be electrically connected to the battery 389 through a conductive connection member (e.g., the conductive connection member 390 of FIGS. 15A and 15B) and the first circuit board 348.

According to an embodiment, the antenna structure 371 may include a board or at least one coil. The board may be disposed on the outer surface of the first plate 211d (e.g., the surface oriented in the -Z direction of FIG. 6). The board may be disposed between the outer surface of the first plate 211d and the first rear surface plate 315. The at least one coil may be disposed on one surface of the board or inside the board. The at least one coil may include a conductive coil.

According to an embodiment, the antenna structure 371 may be electrically connected to the first circuit board 348.

According to an embodiment, the antenna structure 371 may perform short-range communication with an external electronic device or may wirelessly transmit and receive power required for charging.

According to an embodiment, a power management module (e.g., the power management module 188 of FIG. 1) may be disposed or mounted on the first circuit board 348. The power management module may charge the battery 389 by being supplied with an induced current generated by a first coil of the antenna structure 371 (e.g., the first coil 421 of FIGS. 7 to 9). A wireless charging circuit including a rectifier configured to rectify the induced current may be disposed on the first circuit board 348. The wireless charging circuit may include a converter configured to convert the induced current into operating power or charging power.

According to an embodiment, a short-range wireless communication module (e.g., the wireless communication module 192 of FIG. 1) may be disposed or mounted on the first circuit board 348. The short-range wireless communication module may transmit, through a second coil of the antenna structure 371 (e.g., the second coil 422 of FIGS. 7 to 9), a short-range communication signal or a magnetic-based signal including payment data.

According to an embodiment, the antenna structure 371 may include a first side connector 378 or a second side connector 379. The first side connector 378 may extend from the board. The first side connector 378 may be electrically connected to a key input device (e.g., the key input device 245 of FIG. 2) disposed on the (1-2)^{th} side wall 311b. The second side connector 379 may be electrically connected to a key input device disposed on the (1-3)^{th} side wall 311c.

According to an embodiment, the opening 312 of the first housing portion 301 and/or the first cover member 311 may provide a passage or a space through which the antenna structure 371 and the first circuit board 348 are connected. For example, the antenna structure 371 may have a position relatively fixed with respect to the first cover member 311 and may have a position not relatively fixed with respect to the second cover member 321. The first circuit board 348 may have a position relatively fixed with respect to the second cover member 321 and may have a position not relatively fixed with respect to the first cover member 311. Accordingly, when the second housing portion 302 moves with respect to the first housing portion 301, the first circuit board 348 may move with respect to the antenna structure 371. When the housing 310 is in the closed state (e.g., FIG. 2 or FIG. 5A), the first circuit board 348 may be positioned between the inner surface of the first plate 311d (e.g., the surface oriented in the +Z direction of FIG. 6) and the inner surface of the second plate 321d (e.g., the surface oriented in the -Z direction of FIG. 6), and the antenna structure 371 may be disposed on the outer surface of the first plate 311d (e.g., the surface oriented in the -Z direction of FIG. 6). A connection member electrically and/or physically connecting the antenna structure 371 and the first circuit board 348 may be at least partially disposed in the opening 312 and may electrically and/or physically connect the antenna structure 371 and the first circuit board 348 positioned in different directions with respect to the first plate 311d.

According to an embodiment, the second circuit board 349 may be disposed on the outer surface of the first plate 311d (e.g., the surface oriented in the -Z direction of FIG. 6). The second circuit board 349 may be electrically connected to the first circuit board 348. A connection member electrically and/or physically connecting the second circuit board 349 and the first circuit board 348 may be at least partially disposed in the opening 312 and may electrically and/or physically connect the second circuit board 349 and the first circuit board 348 positioned in different directions with respect to the first plate 311d. The second circuit board 349 may be referred to as a sub-circuit board.

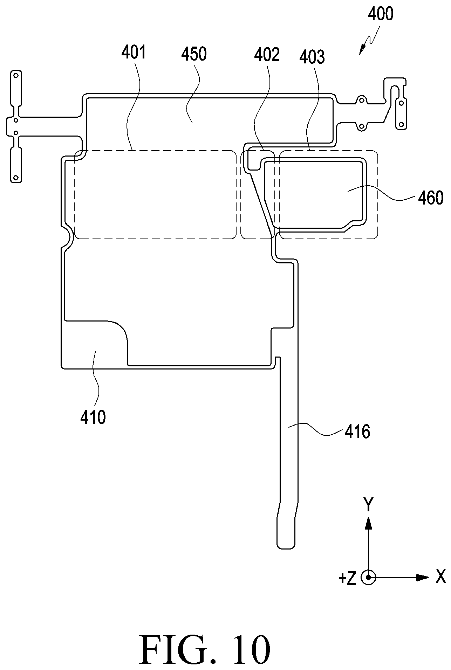

The embodiments of FIGS. 7 to 9 may be combined with the embodiments of FIGS. 1 to 6 or the embodiments of FIGS. 10 to 15B.

Referring to FIGS. 7 to 9, the electronic device (e.g., the electronic device 101 of FIG. 1 or the electronic device 101 of FIGS. 2 to 6) may include a first cover member 311 or an antenna structure 400.

The configurations of the first cover member 311 or the antenna structure 400 of FIGS. 7 to 9 may be partially or wholly identical to the configuration of the first cover member 311 or the antenna structure 371 of FIG. 6.

According to an embodiment, the first cover member 311 may include a first plate 311d (e.g., the first plate 311d of FIG. 6) or an opening 312 (e.g., the opening 312 of FIG. 6).

According to an embodiment, the antenna structure 400 may include a board 410, at least one coil 420, at least one shielding member 430, a heat dissipation member 440, a first adhesive member 450, a support member 460, a second adhesive member 470, or a third adhesive member 480.

According to an embodiment, the board 410 may be disposed on an outer surface of the first plate 311d (e.g., the surface oriented in the -Z direction of FIGS. 7 to 9). The board 410 may include a flexible printed circuit board (FPCB). The board 410 may include a printed circuit board (PCB) or a rigid-flexible PCB (RF-PCB).

According to an embodiment, at least one coil 420 may be disposed on the board 410.

According to an embodiment, the at least one coil 420 may be disposed on one surface of the board 410 (e.g., the surface oriented in the -Z direction of FIGS. 7 to 9). The at least one coil 420 may also be disposed in the board 410.

According to an embodiment, the at least one coil may be formed on one surface of the board 410 through a laser direct structuring (LDS) process. For example, the at least one coil may be defined and/or referred to as an antenna pattern formed on one surface of the board 410.

According to an embodiment, the board 410 may include a base portion 411, a bending portion 412, or an extension portion 413.

According to an embodiment, the base portion 411 may be disposed on the outer surface of the first plate 311d (e.g., the surface oriented in the -Z direction of FIGS. 7 to 9). The base portion 411 may form an overall body shape or an overall external appearance shape of the antenna structure 400. The base portion 411 may be defined and/or referred to as a first area, a first body portion, or a first board portion.

According to an embodiment, the extension portion 413 may extend from the base portion 412. The extension portion 413 may protrude from at least a portion of the base portion 412. The extension portion 413 may be defined and/or referred to as a second area, a second body portion, a second board portion, or a protruding portion.

According to an embodiment, the extension portion 413 may be configured to be foldable with respect to the base portion 411. For example, the board 410 may include a bending portion 412 connected to the base portion 411 and the extension portion 413. The bending portion 412 may be configured to be at least partially folded or unfolded. As the bending portion 412 is configured to be foldable, the extension portion 413 may be configured to be folded or unfolded with respect to the base portion 411.

According to an embodiment, the extension portion 413 may overlap the opening 312. For example, the extension portion 413 may overlap the opening 312 in a second direction (e.g., the Z-axis direction of FIGS. 7 to 9). The extension portion 413 may be disposed over the opening 312.

According to an embodiment, the board 410 may include a connection portion 416. The connection portion 416 may extend from the base portion 411. The connection portion 416 may be configured to be foldable with respect to the base portion 411. The connection portion 416 may be configured such that at least a portion of the connection portion 416 is foldable. The connection portion 416 may be defined and/or referred to as a third area, a third body portion, or a third board portion.

According to an embodiment, the connection portion 416 may be physically and/or electrically connected to a conductive connection member (e.g., the conductive connection member 390 of FIGS. 15A and 15B). As the conductive connection member is physically and/or electrically connected to a first circuit board (e.g., the first circuit board 348 of FIG. 6), the antenna structure 400 and/or the board 410 may be electrically connected to the first circuit board through the connection portion 416 and the conductive connection member.

According to an embodiment, the board 410 may include a first side connector 418 (e.g., the first side connector 318 of FIG. 6) or a second side connector 419 (e.g., the second side connector 319 of FIG. 6).

According to an embodiment, at least one coil 420 may be disposed on the board 410. The at least one coil 420 may include a first coil 421 or a second coil 422.

According to an embodiment, the first coil 421 may be disposed on one surface of the board 410 (e.g., the surface oriented in the -Z direction of FIGS. 7 to 9).

According to an embodiment, the first coil 421 may be at least partially disposed inside the second coil 422. The first coil 421 may be a wireless charging coil. For example, when the electronic device (e.g., the electronic device 101 of FIGS. 2 to 5B) is placed on a wireless power transmission device (e.g., a wireless charger or a wireless charging pad), the first coil 421 of the antenna structure 400 may be aligned with a coil of the wireless power transmission device. In response to an electromagnetic field generated by the coil of the wireless power transmission device, the first coil 421 of the antenna structure 400 may generate an induced current. The induced current generated by the first coil 421 may be used as charging power for charging a battery of the electronic device (e.g., the battery 389 of FIG. 6). The first coil 421 may be electrically connected to the battery through a conductive connection member (e.g., the conductive connection member 390 of FIGS. 15A and 15B) and a first circuit board (e.g., the first circuit board 348 of FIG. 6 or the first circuit board 348 of FIG. 15B).

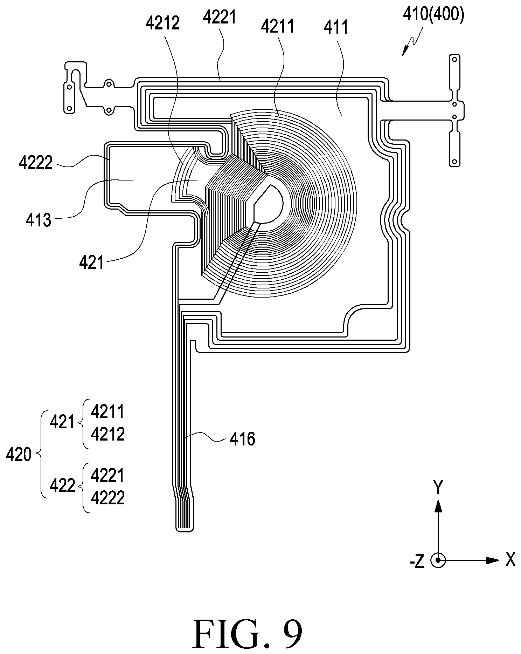

According to an embodiment, the first coil 421 may have a wound shape. For example, the first coil 421 may have a shape wound a plurality of times. The first coil 421 may include a loop coil. A first portion of the first coil 421 (e.g., the first portion 4211 of FIG. 9) may be disposed in the base portion 411. At least a portion of the first coil 421 may be disposed in the extension portion 413. For example, a second portion of the first coil 421 (e.g., the second portion 4212 of FIG. 9) may be disposed in the extension portion 413. As the extension portion 413 overlaps the opening 312, the second portion 4212 of the first coil 421 may overlap the opening 312 in a second direction (e.g., the Z-axis direction of FIGS. 7 to 9). A portion of the first coil 421 overlapping the opening 312 may be interpreted as the second portion 4212, and a portion not overlapping the opening 312 may be interpreted as the first portion 4211.

According to an embodiment, the second coil 422 may be disposed on one surface of the board 410 (e.g., the surface oriented in the -Z direction of FIGS. 7 to 9).

According to an embodiment, the second coil 422 may be disposed along an edge of the board 410. The second coil 422 may extend along an edge of the board 410. The second coil 422 may be at least partially disposed outside the first coil 421. The first coil 421 may be configured to transmit and receive a radio frequency signal for near-field (NFC) communication.

According to an embodiment, the second coil 422 may include a loop coil extending along the edge of the board 410. A third portion of the second coil 422 (e.g., the third portion 4221 of FIG. 9) may be disposed in the base portion 411. At least a portion of the second coil 422 may be disposed in the extension portion 413. For example, a fourth portion of the second coil 422 (e.g., the fourth portion 4222 of FIG. 9) may be disposed in the extension portion 413. As the extension portion 413 overlaps the opening 312, the fourth portion 4222 of the second coil 422 may overlap the opening 312 in the second direction (e.g., the Z-axis direction of FIGS. 7 to 9). A portion of the second coil 422 overlapping the opening 312 may be interpreted as the fourth portion 4222, and a portion not overlapping the opening 312 may be interpreted as the first portion 4221.

According to an embodiment, the first coil 421 and/or the second coil 422 may be at least partially disposed in the connection portion 412.

According to an embodiment, the at least one shielding member 430 may be coupled to the board 410. For example, the at least one shielding member 430 may be disposed or stacked on the other surface of the board 410 (e.g., the surface oriented in the +Z direction of FIGS. 7 to 9).

According to an embodiment, the at least one shielding member 430 may include a copper (Cu) sheet. The at least one shielding member 430 may be configured to shield interference of electromagnetic waves so that electromagnetic waves generated from the at least one coil 420 do not affect surrounding electronic components of the electronic device.

According to an embodiment, the at least one shielding member 430 may include a first shielding member 431 or a second shielding member 433. The first shielding member 431 may be disposed or stacked below the base portion 411 (e.g., in the +Z-axis direction of FIG. 7). The shape and/or the size of the first shielding member 431 may correspond to the shape and/or the size of the base portion 411. The second shielding member 433 may be disposed or stacked below the extension portion 413 (e.g., in the +Z-axis direction of FIG. 7). The shape and/or the size of the second shielding member 433 may correspond to the shape and/or the size of the extension portion 413.

According to an embodiment, the first shielding member 431 may be disposed between the base portion 411 and the heat dissipation member 440.

According to an embodiment, the second shielding member 433 may be disposed between the extension portion 413 and the second adhesive member 470. The second shielding member 433 may at least partially overlap the opening 312 in a second direction (e.g., the Z-axis direction of FIGS. 7 to 9).

According to an embodiment, the heat dissipation member 440 may be coupled to at least one shielding member 430. For example, the heat dissipation member 440 may be disposed or stacked on the first shielding member 431. The heat dissipation member 440 may include a graphite sheet. The heat dissipation member 440 may be configured to efficiently dissipate heat generated from the at least one coil 420. The heat dissipation member 440 may be defined and/or referred to as a heat spreading member. The shape and/or the size of the heat dissipation member 440 may correspond to the shape and/or the size of the first shielding member 431.

According to an embodiment, the heat dissipation member 440 may be disposed between the first shielding member 431 and the first plate 311d. The heat dissipation member 440 may be disposed between the first shielding member 431 and the first adhesive member 450.

According to an embodiment, the first adhesive member 450 may be disposed between the first plate 311d and the heat dissipation member 440. The first adhesive member 450 may include a double-sided tape. The first adhesive member 450 may be configured to adhere the antenna structure 400 to the first plate 311d. The shape and/or the size of the first adhesive member 450 may correspond to the shape and/or the size of the heat dissipation member 440.

According to an embodiment, the second adhesive member 470 may be disposed between the second shielding member 433 and the support member 460. The second adhesive member 470 may at least partially overlap the opening 312 in the second direction (e.g., the Z-axis direction of FIGS. 7 to 9). The second adhesive member 470 may include a double-sided tape. The second adhesive member 470 may be configured to adhere the second shielding member 433 and the support member 470. The shape and/or the size of the second adhesive member 470 may correspond to the shape and/or the size of the second shielding member 433.

According to an embodiment, the support member 460 may be disposed between the second adhesive member 470 and the third adhesive member 480. The support member 460 may at least partially overlap the opening 312 in the second direction (e.g., the Z-axis direction of FIGS. 7 to 9).

According to an embodiment, the support member 460 may include a rigid material. For example, the support member 460 may include stainless steel (STS) or plastic. The size of the support member 460 may be greater than the size of the opening 312, but the disclosure is not limited thereto. The support member 460 may cover the opening 312. The support member 460 may be defined and/or referred to as a cover member.

According to an embodiment, the support member 460 may be disposed or seated on an inner rim or an inner edge of the first plate 311d defining the first opening 312. The support member 460 may be coupled to the inner rim or the inner edge defining the first opening 312 through the third adhesive member 480.

According to an embodiment, the support member 460 may support the extension portion 413 so that the extension portion 413 is not inserted into the opening 312 when an external impact or pressure is applied to the electronic device. As the support member 460 covers the opening 312 of the first plate 311d, flatness or rigidity of the first plate 311d may be improved.

According to an embodiment, the support member 460 may be configured to be adhered to the first plate 311d through the third adhesive member 480.

According to an embodiment, the third adhesive member 480 may be disposed between the first plate 311d and the support member 460. The third adhesive member 480 may include a double-sided tape.

According to an embodiment, the third adhesive member 480 may be disposed or seated on at least a portion of an inner rim or an inner edge of the first plate 311d defining the opening 312. The third adhesive member 480 may be configured to fix or couple the support member 460 to the first plate 311d.

According to an embodiment, the third adhesive member 480 may be configured to couple at least two edges of the support member 460 and at least two inner rims or inner edges defining the opening 312. For example, the third adhesive member 380 may be adhered to at least two edges of the support member 460 and at least two inner rims defining the opening 312. The third adhesive member 480 may include a first adhesive portion 481 or a second adhesive portion 482. One end of the first adhesive portion 481 may be connected to one end of the second adhesive portion 482. The first adhesive portion 481 and the second adhesive portion 482 may extend in different directions. The first adhesive portion 481 may be disposed perpendicular to the second adhesive portion 482, but the disclosure is not limited thereto.

According to an embodiment, the first adhesive portion 481 may be configured to couple a first edge of the support member 460 and a first inner rim defining the opening 312. The second adhesive portion 482 may be configured to couple a second edge of the support member 460 and a second inner rim defining the opening 312.

According to an embodiment, at least a portion of the connection portion 416 may be disposed between one or more remaining edges of the support member 460 on which the third adhesive member 480 is not disposed and one or more remaining inner rims defining the opening 312. For example, the connection portion 416 may be disposed to be inserted into the opening 312 through a space between the one or more remaining edges of the support member 460 and the one or more remaining inner rims.

According to an embodiment, at least a portion 4212 of the first coil 421 may overlap the opening 312 in the second direction (e.g., the Z-axis direction of FIGS. 7 to 9) as the at least a portion 4212 of the first coil 421 is disposed in the extension portion 413. At least a portion 4222 of the second coil 422 may overlap the opening 312 in the second direction (e.g., the Z-axis direction of FIGS. 7 to 9) as the at least a portion 4222 of the second coil 422 is disposed in the extension portion 413. As the at least one coil 420 at least partially overlaps the opening 312, a design area of the at least one coil 420 disposed or mounted on the board 410 may be improved.

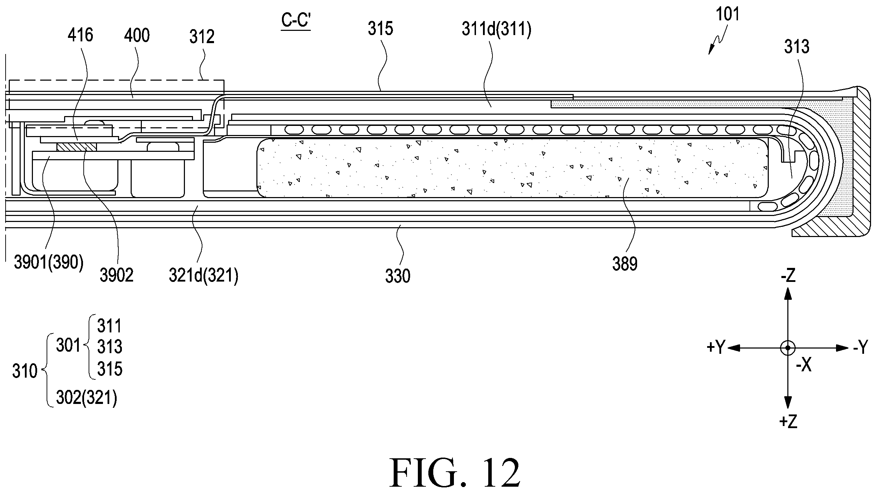

The embodiments of FIGS. 10 to 11 may be combined with the embodiments of FIGS. 1 to 9 or the embodiments of FIGS. 12 to 15B.

Referring to FIG. 10, the antenna structure 400 (e.g., the antenna structure 400 of FIGS. 7 to 9) may include a board 410, a connection portion 416, a first adhesive member 450, or a support member 460.

The configurations of the board 410, the connection portion 416, the first adhesive member 450, or the support member 460 of FIG. 10 may be partially or wholly identical to the configurations of the board 410, the connection portion 416, the first adhesive member 450, or the support member 460 of FIGS. 7 to 9.

According to an embodiment, the antenna structure 400 may include a first area 401, a second area 402, or a third area 403. The first area 401 of the antenna structure 400 may be defined as a base portion of the board 410 (e.g., the base portion 411 of FIGS. 7 to 9) and at least a portion of the components stacked on the base portion. The second area 402 of the antenna structure 400 may be defined as a bending portion (e.g., the bending portion 412 of FIGS. 7 to 9) and at least a portion of the components stacked on the bending portion. The third area 403 of the antenna structure 400 may be defined as an extension portion (e.g., the extension portion 413 of FIGS. 7 to 9) and at least a portion of the components stacked on the extension portion.

According to an embodiment, the third area 403 may be configured to be foldable with respect to the first area 401. For example, the second area 402 may be connected to the first area 401 and the third area 403, and the second area 402 may be at least partially folded or unfolded.

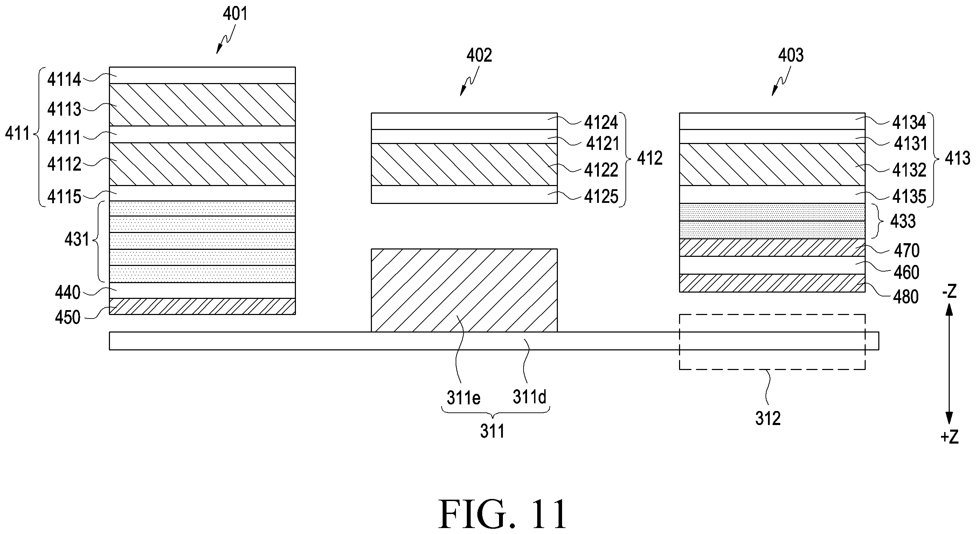

FIG. 11 is a schematic view illustrating a stacked structure of areas of an antenna structure (e.g., the antenna structure 400 of FIGS. 7 to 10) (e.g., the areas 401, 402, and 403 of FIG. 10).

Referring to FIGS. 10 and 11, the board 410 may include a flexible printed circuit board (FPCB). The board 410 may include a base portion 411 (e.g., the base portion 411 of FIGS. 7 to 9), a bending portion 412 connected to the base portion 411 (e.g., the bending portion 412 of FIGS. 7 to 9), or an extension portion 413 connected to the bending portion 412 (e.g., the extension portion 413 of FIGS. 7 to 9).

According to an embodiment, the first area 401 may include a base portion 411 (e.g., the base portion 411 of FIGS. 7 to 9), a first shielding member 431 (e.g., the first shielding member 431 of FIGS. 7 to 9), a heat dissipation member 440 (e.g., the heat dissipation member 440 of FIGS. 7 to 9), or a first adhesive member 450 (e.g., the first adhesive member 450 of FIGS. 7 to 9).

According to an embodiment, the base portion 411 may include a first film layer 4111, a first conductive layer 4112, a fourth conductive layer 4113, a (1-1)^{th} coverlay layer 4114, or a (1-2)^{th} coverlay layer 4115.

According to an embodiment, the first film layer 4111 may be a polyimide (PI)-based film layer.

According to an embodiment, the first conductive layer 4112 may be disposed on one surface of the first film layer 4111 (e.g., the surface oriented in the +Z direction of FIG. 11), and the fourth conductive layer 4113 may be disposed on the other surface of the first film layer 4111 (e.g., the surface oriented in the -Z direction of FIG. 11). The first conductive layer 4112 and the fourth conductive layer 4113 may be electrically connected through a conductive via.

According to an embodiment, the first film layer 4111, the first conductive layer 4112, and the fourth conductive layer 4113 may form a flexible copper clad laminate (FCCL). The first conductive layer 4112 may be a metal foil (e.g., copper (Cu)) stacked on one surface of the first film layer 4111. The fourth conductive layer 4113 may be a metal foil (e.g., copper (Cu)) stacked on the other surface of the first film layer 4111.

According to an embodiment, each of the first conductive layer 4112 and the fourth conductive layer 4113 may include a signal wire for signal transmission.

According to an embodiment, the (1-1)^{th} coverlay layer 4114 may be disposed on one surface of the fourth conductive layer 4114 (e.g., the surface oriented in the -Z direction of FIG. 11). The (1-1)^{th} coverlay layer 4114 may be a base layer based on polypropylene glycol (PPG) or polyimide (PI).

According to an embodiment, the (1-2)^{th} coverlay layer 4115 may be disposed on one surface of the first conductive layer 4112 (e.g., the surface oriented in the +Z direction of FIG. 11). The (1-2)^{th} coverlay layer 4115 may be a base layer based on polypropylene glycol (PPG) or polyimide (PI).

According to an embodiment, the first shielding member 431 may be disposed on the (1-2)^{th} coverlay layer 4115. The first shielding member 431 may include a plurality of shielding sheets. According to the illustrated embodiment, the first shielding member 431 may include five shielding sheets, but the disclosure is not limited thereto. The thickness of the first shielding member 431 (e.g., the thickness in the Z-axis direction of FIG. 11) may be greater than the thickness of the second shielding member 433 (e.g., the thickness in the Z-axis direction of FIG. 11), but the disclosure is not limited thereto. The number of second shielding members 433 may be smaller than the number of first shielding members 431, but the disclosure is not limited thereto.

According to an embodiment, the heat dissipation member 440 may be disposed on the first shielding member 431. The first adhesive member 450 may be disposed on the heat dissipation member 440.

According to an embodiment, the second area 402 may include the bending portion 412 (e.g., the bending portion 412 of FIGS. 7 to 9).

According to an embodiment, the bending portion 412 may include a second film layer 4121, a second conductive layer 4122, a (2-1)^{th} coverlay layer 4124, or a (2-2)^{th} coverlay layer 4125.

According to an embodiment, the second film layer 4121 may be a polyimide (PI)-based film layer.

According to an embodiment, the second conductive layer 4122 may be disposed on one surface of the second film layer 4121 (e.g., the surface oriented in the +Z direction of FIG. 11).

According to an embodiment, the second film layer 4121 and the second conductive layer 4122 may form a flexible copper clad laminate (FCCL). The second conductive layer 4122 may be a metal foil (e.g., copper (Cu)) stacked on one surface of the second film layer 4121.

According to an embodiment, the second conductive layer 4122 may include a signal wire for signal transmission.

According to an embodiment, the (2-1)^{th} coverlay layer 4124 may be disposed on the other surface of the second film layer 4121 (e.g., the surface oriented in the -Z direction of FIG. 11). The (2-1)^{th} coverlay layer 4124 may be a base layer based on polypropylene glycol (PPG) or polyimide (PI).

According to an embodiment, the (2-2)^{th} coverlay layer 4125 may be disposed on one surface of the second conductive layer 4122 (e.g., the surface oriented in the +Z direction of FIG. 11). The (2-2)^{th} coverlay layer 4125 may be a base layer based on polypropylene glycol (PPG) or polyimide (PI).

According to an embodiment, the third area 403 may include an extension portion 413 (e.g., the extension portion 413 of FIGS. 7 to 9), a second shielding member 433 (e.g., the second shielding member 433 of FIGS. 7 to 9), a second adhesive member 470 (e.g., the second adhesive member 470 of FIGS. 7 to 9), a support member 460 (e.g., the support member 460 of FIGS. 7 to 9), or a third adhesive member 480 (e.g., the third adhesive member 480 of FIGS. 7 to 9).

According to an embodiment, the extension portion 413 may include a third film layer 4131, a third conductive layer 4132, a (3-1)^{th} coverlay layer 4134, or a (3-2)^{th} coverlay layer 4135.

According to an embodiment, the third film layer 4131 may be a polyimide (PI)-based film layer.

According to an embodiment, the third conductive layer 4132 may be disposed on one surface of the third film layer 4131 (e.g., the surface oriented in the +Z direction of FIG. 11).

According to an embodiment, the third film layer 4131 and the third conductive layer 4132 may form a flexible copper clad laminate (FCCL). The third conductive layer 4132 may be a metal foil (e.g., copper (Cu)) stacked on one surface of the third film layer 4131.

According to an embodiment, the third conductive layer 4132 may include a signal wire for signal transmission.

According to an embodiment, the (3-1)^{th} coverlay layer 4134 may be disposed on the other surface of the third film layer 4131 (e.g., the surface oriented in the -Z direction of FIG. 11). The (3-1)^{th} coverlay layer 4134 may be a base layer based on polypropylene glycol (PPG) or polyimide (PI).

According to an embodiment, the (3-3)^{th} coverlay layer 4135 may be disposed on one surface of the second conductive layer 4132 (e.g., the surface oriented in the +Z direction of FIG. 11). The (3-2)^{th} coverlay layer 4135 may be a base layer based on polypropylene glycol (PPG) or polyimide (PI).

According to an embodiment, the second shielding member 433 may be disposed on the (3-2)^{th} coverlay layer 4135. The second shielding member 433 may include a plurality of shielding sheets. According to the illustrated embodiment, the second shielding member 433 may include three shielding sheets, but the disclosure is not limited thereto. The number of second shielding members 433 may be smaller than the number of first shielding members 431, but the disclosure is not limited thereto.

According to an embodiment, the second adhesive member 470 may be disposed on the second shielding member 433. The support member 460 may be disposed on the second adhesive member 470. The third adhesive member 480 may be disposed on the support member 460.

According to an embodiment, the first film layer 4111, the second film layer 4121, and the third film layer 4131 may be formed as substantially the same film layer. For example, the second film layer 4121 may be integrally formed with the first film layer 4111 and the third film layer 4131, but the disclosure is not limited thereto.

According to an embodiment, the first conductive layer 4112, the second conductive layer 4122, and the third conductive layer 4132 may be formed as substantially the same conductive layer. For example, the second conductive layer 4122 may be integrally formed with the first conductive layer 4112 and the third conductive layer 4132, but the disclosure is not limited thereto.

According to an embodiment, the (1-1)^{th} coverlay layer 4114, the (2-1)^{th} coverlay layer 4124, and the (3-1)^{th} coverlay layer 4134 may be formed as substantially the same coverlay layer. For example, the (2-1)^{th} coverlay layer 4124 may be integrally formed with the (1-1)^{th} coverlay layer 4114 and the (3-1)^{th} coverlay layer 4134, but the disclosure is not limited thereto. According to an embodiment, the (1-2)^{th} coverlay layer 4115, the (2-2)^{th} coverlay layer 4125, and the (3-2)^{th} coverlay layer 4135 may be formed as substantially the same coverlay layer. For example, the (2-2)^{th} coverlay layer 4125 may be integrally formed with the (1-2)^{th} coverlay layer 4115 and the (3-2)^{th} coverlay layer 4135, but the disclosure is not limited thereto. The coverlay layer may be defined and/or referred to as an insulating layer.

According to an embodiment, at least one coil (e.g., the at least one coil 420 of FIGS. 7 to 9) may be disposed or mounted on outer surfaces of the (1-1)^{th} coverlay layer 4114, the (2-1)^{th} coverlay layer 4124, and the (3-1)^{th} coverlay layer 4134 (e.g., the surfaces oriented in the -Z direction of FIG. 11).

According to an embodiment, the base portion 411 may include a plurality of first layers 4111, 4112, 4113, 4114, and 4115. The extension portion 413 may include a plurality of second layers 4131, 4132, 4133, and 4134. The number of first layers 4111, 4112, 4113, 4114, and 4115 may be different from the number of second layers 4131, 4132, 4133, and 4134. For example, the number of first layers 4111, 4112, 4113, 4114, and 4115 may be greater than the number of second layers 4131, 4132, 4133, and 4134.

According to an embodiment, the thickness of the first area 401 (e.g., the thickness in the Z-axis direction of FIG. 11) may be greater than the thickness of the second area 402. The thickness of the third area 403 may be greater than the thickness of the second area 402. The thickness of the third area 403 may be smaller than the thickness of the first area 401, but the disclosure is not limited thereto.

According to an embodiment, as the base portion 411 includes the fourth conductive layer 4113, the base portion 411 may be thicker than the bending portion 412. As the bending portion 412 is configured to be thinner than the base portion 411, the bending portion 412 may be relatively more flexible than the base portion 411. The bending portion 412 may be defined as a portion of a board (e.g., the board 410 of FIG. 10) that is at least partially folded or unfolded. The bending portion 412 may be at least partially folded or unfolded. As the bending portion 412 is folded or unfolded, the third area 403 and/or the extension portion 413 may be configured to be foldable with respect to the first area 401 and/or the base portion 411.

According to an embodiment, the third area 403 and/or the extension portion 413 may overlap an opening 312 (e.g., the opening 312 of FIG. 7) formed in a first plate 311d (e.g., the first plate 311d of FIG. 7) of a first cover member 311 (e.g., the first cover member 311 of FIG. 7). For example, the extension portion 413 may be disposed over the opening 312.

According to an embodiment, the first cover member 311 may include a protruding portion 311e. The protruding portion 311e may protrude from at least a portion of the first plate 311d. The protruding portion 311e may be disposed to correspond to the bending portion 412. For example, the protruding portion 311e may protrude toward the second area 402 and/or the bending portion 412. As the second area 402 and/or the bending portion 412 is configured to be thinner than other areas 401 and 403 and/or other portions 411 and 413, a gap may be formed between the second area 402 and/or the bending portion 412 and the first plate 311d. As the gap is filled by the protruding portion 412, the gap between the bending portion 412 and the first plate 311d may be eliminated or minimized. When an external impact is applied to the electronic device, the second area 402 and/or the bending portion 412 may be supported by the protruding portion 412, and occurrence of a crack or tearing in the second area 402 and/or the bending portion 412 may be limited and/or reduced. The protruding portion 311d may be defined and/or referred to as a rib.

FIG. 12 is a cross-sectional view taken along line C-C' of FIG. 2, according to an embodiment of the disclosure.

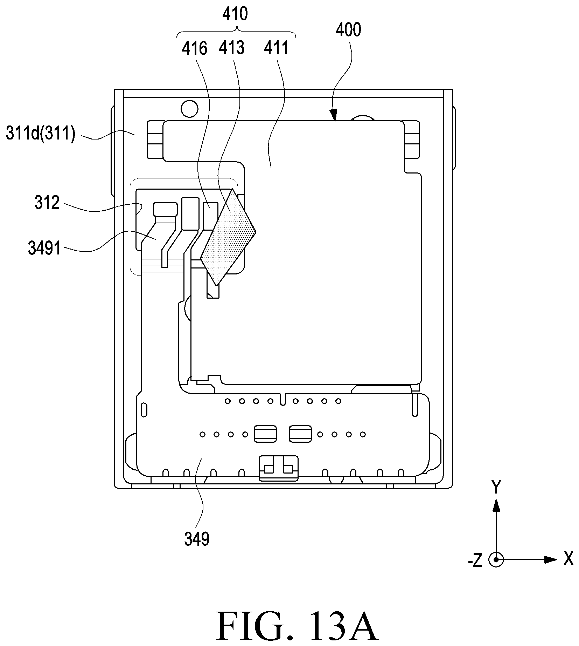

The embodiment of FIG. 12 may be combined with the embodiments of FIGS. 1 to 11 or the embodiments of FIGS. 13A to 15B.

Referring to FIG. 12, the electronic device 101 (e.g., the electronic device 101 of FIG. 1 or the electronic device 101 of FIGS. 2 to 7) may include a housing 310, a display 330, an antenna structure 400, a battery 389, or a conductive connection member 390.

The configurations of the housing 310, the display 330, or the battery 389 of FIG. 12 may be partially or wholly identical to the configurations of the housing 310, the display 330, or the battery 389 of FIG. 6. The configuration of the antenna structure 400 of FIG. 12 may be partially or wholly identical to the configuration of the antenna structure 400 of FIG. 7.

According to an embodiment, the housing 310 may include a first housing portion 301 (e.g., the first housing portion 301 of FIGS. 6 to 7) or a second housing portion 302 (e.g., the second housing portion 302 of FIGS. 6 to 7).\

According to an embodiment, the first housing portion 301 may include a first cover member 311 (e.g., the first cover member 311 of FIGS. 6 to 7), a frame 313 (e.g., the frame 313 of FIG. 6), or a first rear surface plate 315 (e.g., the first rear surface plate 315 of FIG. 6). The first cover member 311 may include a first plate 311d (e.g., the first plate 311d of FIGS. 6 to 7) or an opening 312 (e.g., the opening 312 of FIGS. 6 to 7).

According to an embodiment, the second housing portion 302 may include a second cover member 321 (e.g., the second cover member 321 of FIG. 6). The second cover member 321 may include a second plate 321d (e.g., the second plate 321d of FIG. 6).

According to an embodiment, when the housing 310 is in the slid-in state (e.g., FIG. 2 or FIG. 5A), the battery 389 may be positioned between the first plate 311d and the second plate 321d.

According to an embodiment, when the housing 310 is in the slid-in state (e.g., FIG. 2 or FIG. 5A), the second plate 321d may be disposed between the display 330 and the first plate 311d. When the housing 310 is in the slid-in state, the first housing portion 301 and/or the first plate 311d may be interpreted as being arranged on an outer side of the electronic device 101, and the second housing portion 302 and/or the second plate 321d may be interpreted as being arranged on an inner side of the electronic device 101. For example, when the housing 310 is in the slid-in state, the first plate 311d may be at least partially disposed on an outer side of the second plate 321d.

According to an embodiment, the antenna structure 400 may include a connection portion 416 (e.g., the connection portion 416 of FIGS. 7 to 9). The connection portion 416 may extend from a board (e.g., the board 410 of FIGS. 7 to 9). At least a portion of the connection portion 416 may be disposed in the opening 312. The connection portion 416 may be disposed to overlap the opening 312. The connection portion 416 may be physically and/or electrically connected to a conductive connection member 390 (e.g., the conductive connection member 390 of FIGS. 15A and 15B).

According to an embodiment, the conductive connection member 390 may include a flexible printed circuit board (FPCB). According to an embodiment, the conductive connection member 390 may be electrically connected to the connection portion 416 and a first circuit board (e.g., the first circuit board 348 of FIG. 6). According to an embodiment, the antenna structure 400 may be electrically connected to the first circuit board through the conductive connection member 390.

According to an embodiment, the conductive connection member 390 may include a connector 3901. The connector 3901 may be electrically connected to the connection portion 416. The connector 3901 may overlap the opening 312 in a second direction (e.g., the Z-axis direction of FIG. 11).

According to an embodiment, the connector 3901 may include a connection pad 3902. The connection pad 3902 may be physically and/or electrically connected to the connection portion 416. The connection pad 3902 may include solder, a socket, or a board-to-board (B2B) connector.

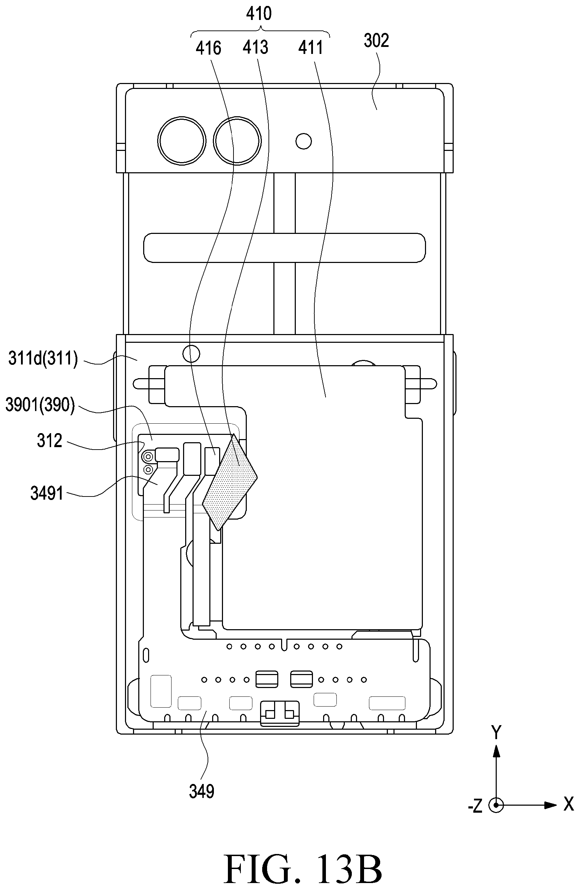

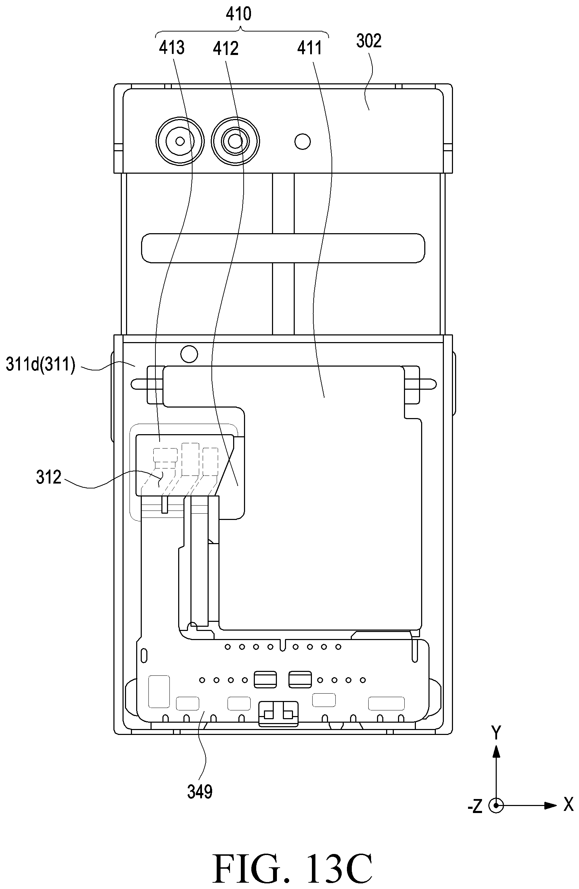

FIGS. 13A, 13B, and 13C are views illustrating an assembly process of an electronic device, according to an embodiment of the disclosure.

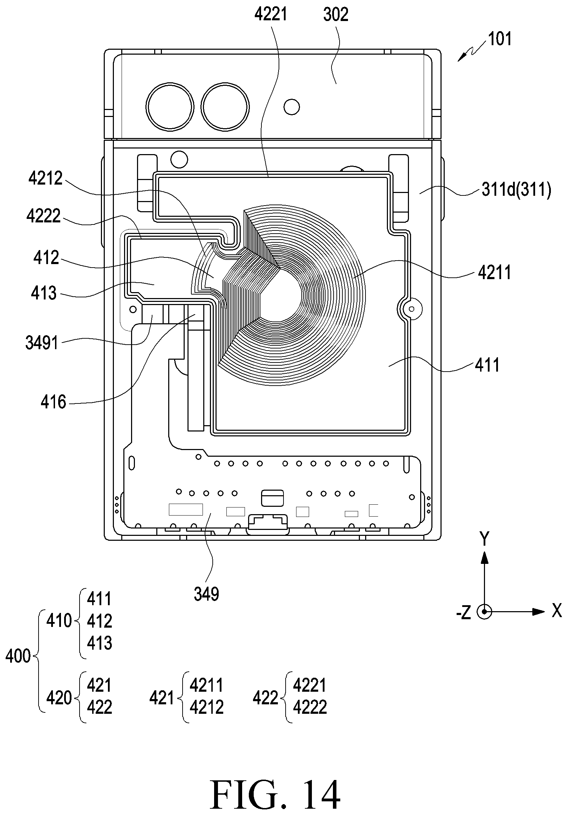

The embodiments of FIGS. 13A to 13C may be combined with the embodiments of FIGS. 1 to 12 or the embodiments of FIGS. 14 to 15B.

Referring to FIG. 13A, the electronic device 101 (e.g., the electronic device 101 of FIG. 1 or the electronic device 101 of FIGS. 2 to 7) may include a first cover member 311 (e.g., the first cover member 311 of FIGS. 6 to 7). The first cover member 311 may include a first plate 311d (e.g., the first plate 311d of FIGS. 6 to 7) or an opening 312 (e.g., the opening 312 of FIGS. 6 to 7).

According to an embodiment, an assembly process of the electronic device 101 may include stacking an antenna structure 400 (e.g., the antenna structure 400 of FIGS. 7 to 9) on the first plate 311d.

According to an embodiment, when the antenna structure 400 is stacked on the first plate 311d, a base portion 411 (e.g., the base portion 411 of FIGS. 7 to 9) of a board 410 (e.g., the board 410 of FIGS. 7 to 9) may be stacked on an outer surface of the first plate 311d (e.g., the surface oriented in the -Z direction of FIG. 13A). When the antenna structure 400 is stacked on the first plate 311d, an extension portion 413 (e.g., the extension portion 413 of FIGS. 7 to 9) may be folded with respect to the base portion 411 so that the opening 312 is opened. When the antenna structure 400 is stacked on the first plate 311d, a connection portion 416 (e.g., the connection portion 416 of FIGS. 7 to 9) may be disposed in the opening 312. A connector 3491 of a second circuit board 349 (e.g., the second circuit board 349 of FIG. 6) disposed on the first plate 311d may also be disposed in the opening 312.

Referring to FIG. 13B, the assembly process of the electronic device 101 may include coupling the second housing portion 302 (e.g., the second housing portion 302 of FIG. 6) and the conductive connection member 390. The second housing portion 302 may be coupled to the first cover member 311 so as to be slidable with respect to the first cover member 311. The conductive connection member 390 may be positioned such that the connector 3901 of the conductive connection member 390 is aligned with the opening 312. A connection portion 416 of the antenna structure 400 and a connector 3491 of the second circuit board 349 may be physically and/or electrically connected to the connector 3901 of the conductive connection member 390. The connector 3901 of the conductive connection member 390, the connection portion 416 of the antenna structure 400, and the connector 3491 of the second circuit board 349 may be disposed to overlap the opening 312.

Referring to FIG. 13C, the assembly process of the electronic device 101 may include closing the opening 312. After the coupling of the second housing portion 302 and the conductive connection member 390 is completed, the extension portion 413 of the antenna structure 400 may be unfolded with respect to the base portion 411 so as to cover the opening 312. For example, the extension portion 413 may be unfolded with respect to the base portion 411 as the bending portion 412 (e.g., the bending portion 412 of FIGS. 7 to 9) is unfolded. The connector 3901 of the conductive connection member 390, the connection portion 416 of the antenna structure 400, and the connector 3491 of the second circuit board 349, which overlap the opening 312, may be at least partially covered by the extension portion 413. Components directly or indirectly stacked on the extension portion 413 (e.g., the second shielding member 433, the second adhesive member 470, and the support member 460 of FIG. 7) may overlap the opening 312. A support member (e.g., the support member 460 of FIG. 7) may be adhered, through a third adhesive member (e.g., the third adhesive member 480 of FIG. 7), to an inner rim of the first plate 311d defining the opening 312.

Although at least one coil (e.g., the at least one coil 420 of FIG. 14) is not illustrated on the antenna structure 400 of FIGS. 13A to 13C, the antenna structure 400 may be stacked and/or assembled on the first plate 311d in a state including the at least one coil. According to an embodiment, after being stacked and/or assembled on the first plate 311d in the state not including the at least one coil, the at least one coil may be formed on the antenna structure 400 by forming the at least one coil.

Referring to FIG. 14, the electronic device 101 (e.g., the electronic device 101 of FIG. 1 or the electronic device 101 of FIGS. 2 to 7) may include a first cover member 311, a second housing portion 302, a second circuit board 349, or an antenna structure 400.

The configurations of the first cover member 311, the second housing portion 302, the second circuit board 349, or the antenna structure 400 of FIG. 14 may be partially or wholly identical to the configurations of the first cover member 311, the second housing portion 302, the second circuit board 349, or the antenna structure 400 of FIGS. 7 to 9.

According to an embodiment, the antenna structure 400 may include a board 410 (e.g., the board 410 of FIGS. 7 to 9) including a base portion 411 (e.g., the base portion 411 of FIGS. 7 to 9), a bending portion 412 (e.g., the bending portion 412 of FIGS. 7 to 9), and an extension portion 413 (e.g., the extension portion 413 of FIGS. 7 to 9).

According to an embodiment, a connection portion 416 of the antenna structure 400 (e.g., the connection portion 416 of FIGS. 7 to 9) and a connector 3491 of the second circuit board 349 (e.g., the connector 3491 of FIGS. 13A to 13B) may be electrically connected to a connector (e.g., the connector 3901 of FIGS. 13A to 13B) of a conductive connection member (e.g., the conductive connection member 390 of FIGS. 13A to 13B).

According to an embodiment, the base portion 411 may be stacked on an outer surface of the first plate 311d (e.g., the first plate 311d of FIGS. 6 to 7) (e.g., the surface oriented in the -Z direction of FIG. 14).

According to an embodiment, the antenna structure 400 may include at least one coil 420 (e.g., the at least one coil 420 of FIGS. 7 to 9). The at least one coil 420 may be disposed or mounted on an outer surface of the board 410 (e.g., the surface oriented in the -Z direction of FIG. 14). The at least one coil 420 may be defined and/or referred to as at least one antenna pattern.

According to an embodiment, the at least one coil 420 may include a first coil 421 (e.g., the first coil 421 of FIGS. 7 to 9) or a second coil 422 (e.g., the second coil 422 of FIGS. 7 to 9).

According to an embodiment, the first coil 421 may include a first portion 4211 (e.g., the first portion 4211 of FIG. 9) disposed in the base portion 411 or a second portion 4212 (e.g., the second portion 4212 of FIG. 9) disposed in the extension portion 413.

According to an embodiment, the second coil 422 may include a third portion 4221 (e.g., the third portion 4221 of FIG. 9) disposed in the base portion 411 or a fourth portion 4222 (e.g., the fourth portion 4222 of FIG. 9) disposed in the extension portion 413.

According to an embodiment, the second portion 4212 of the first coil 421 may at least partially overlap an opening (e.g., the opening 312 of FIGS. 13A to 13C). The fourth portion 4222 of the second coil 422 may at least partially overlap the opening (e.g., the opening 312 of FIGS. 13A to 13C).

According to an embodiment, as at least a portion of the first coil 421 is positioned to overlap the opening, an arrangement area or a mounting area of the first coil 421 on the board 410 may be sufficiently secured. As the arrangement area or the mounting area of the first coil 421 is sufficiently secured, a wireless charging recognition distance and wireless charging efficiency through the first coil 421 may be improved.

**Table 1]**

| | Charging recognition distance of Comparative Example | | | | Charging recognition distance of Embodiment | | | |
|---|---|---|---|---|---|---|---|---|
| | Upper | Lower | Left | Right | Upper | Lower | Left | Right |
| First charging pad | 11 | 9 | 9 | 10 | 11 | 9 | 11 | 10 |
| Second charging pad | 10 | 10 | 8 | 10 | 10 | 10 | 9 | 11 |
| Third charging pad | 11 | 10 | 12 | 11 | 11 | 10 | 12 | 11 |
| Fourth charging pad | 10 | 10 | 10 | 10 | 10 | 10 | 11 | 10 |
| Fifth charging pad | | | 7 | 7 | | | 9 | 10 |

Table 1 above show a wireless charging recognition distance of an antenna structure according to a Comparative Example and a wireless charging recognition distance of an antenna structure according to an Embodiment of the disclosure. The antenna structure according to the Comparative Example is similar to the antenna structure of FIG. 14 and represents an antenna structure in which the first coil is not disposed in the extension portion 413 of FIG. 14. The antenna structure 400 according to the Embodiment of the disclosure is identical to the antenna structure of FIG. 14 and represents an antenna structure in which the first coil 421 is disposed in the extension portion 413 of FIG. 14. The charging pads may be wireless charging devices (or wireless charging pads).

A wireless charging recognition distance may be defined as a distance at which charging is possible even when the center of a coil of the antenna structure is misaligned with the center of a coil of a wireless charging pad. For example, when the antenna structure according to the Embodiment corresponds to a first charging pad, it may be confirmed that the wireless charging recognition distance is a distance up to which charging is recognized even when the center of the first coil 421 of the antenna structure 400 is misaligned with the center of the coil of the first charging pad by 11 mm, 9 mm, 11 mm, and 10 mm in upper, lower, left, and right directions, respectively.

Referring to the wireless charging recognition distances of the antenna structure according to the Comparative Example and the antenna structure 400 according to the Embodiment of the disclosure with respect to different charging pads, it may be confirmed that, for four charging pads among the five charging pads, the wireless charging recognition distance of the antenna structure 400 according to the Embodiment of the disclosure is improved compared with the wireless charging recognition distance of the antenna structure according to the Comparative Example.

**[Table 2]**

| | Reader mode | | | | | | | | |
|---|---|---|---|---|---|---|---|---|---|
| | First mode | Secon d mode | Third mode | Fourth mode | Fifth mode | Sixth mode | Sevent h mode | Eighth mode | Ninth mode |
| Comparative Example | 35 | 42 | 15 | 22 | 15 | 14 | 30 | 60 | 60 |
| Embodiment | 37 | 43 | 17 | 24 | 15 | 15 | 31 | 60 | 60 |

Table 2 above show an NFC recognition distance of an antenna structure according to a Comparative Example and an NFC recognition distance of an antenna structure according to an Embodiment of the disclosure. The antenna structure according to the Comparative Example is similar to the antenna structure of FIG. 14 and represents an antenna structure in which the second coil is not disposed in the extension portion 413 of FIG. 14. The antenna structure 400 according to the Embodiment of the disclosure is identical to the antenna structure of FIG. 14 and represents an antenna structure in which the second coil 422 is disposed in the extension portion 413 of FIG. 14. The reader modes each represent NFC recognition modes through the antenna structure according to the Comparative Example or an NFC recognition mode through the antenna structure 400 according to the Embodiment of the disclosure.

The NFC recognition distance may be defined as a vertical distance at which a coil of the antenna structure is capable of recognizing an NFC tag. For example, in a first mode, the second coil 422 of the antenna structure 400 according to the Embodiment may recognize an NFC tag spaced apart by 37 mm in a vertical direction. Referring to the NFC recognition distances of the antenna structure according to the Comparative Example and the antenna structure 400 according to the Embodiment of the disclosure in different reader modes, it may be confirmed that, for six reader modes among the nine reader modes, the NFC recognition distance of the antenna structure 400 according to the Embodiment of the disclosure is improved compared with the NFC recognition distance of the antenna structure according to the Comparative Example.

FIG. 15A is a rear view of an electronic device in the slid-in state, according to an embodiment of the disclosure. FIG. 15B is a rear view of the electronic device in the slid-out state, according to an embodiment of the disclosure.

The embodiments of FIGS. 15A and 15B may be combined with the embodiments of FIGS. 1 to 14.

Referring to FIGS. 15A and 15B, the electronic device 101 (e.g., the electronic device 101 of FIG. 1 or the electronic device 101 of FIGS. 2 to 6) may include a housing 310 (e.g., the housing 310 of FIG. 6).

According to an embodiment, the housing 310 may include a first housing portion 301 (e.g., the first housing portion 301 of FIG. 6) including a first cover member 311 (e.g., the first cover member 311 of FIG. 6), or a second housing portion 302 (e.g., the second housing portion 302 of FIG. 6) including a second cover member 321.

According to an embodiment, the second housing portion 302 may be configured to move between a retracted position (e.g., FIG. 2, FIG. 5A, or FIG. 15A) and an extended position (e.g., FIG. 3, FIG. 5B, or FIG. 15B) with respect to the first housing portion 301.

According to an embodiment, the antenna structure 400 (e.g., the antenna structure 400 of FIGS. 7 to 9) may include a board 410 (e.g., the board 410 of FIGS. 7 to 9).

According to an embodiment, at least a portion of the board 410 may be disposed on the first plate 311d (e.g., the first plate 311d of FIGS. 6 to 7) of the first cover member 311, and the extension portion 413 (e.g., the extension portion 413 of FIGS. 7 to 9) of the board 410 may overlap the opening 312 (e.g., the opening 312 of FIGS. 6 to 7) of the first plate 311d.

In the embodiment of FIGS. 15A and 15B, for convenience of description, the connection portion 416 is illustrated such that the opening 312 is open, but the connection portion 416 may be disposed and used so as to close the opening 312.

According to an embodiment, a connection portion 416 (e.g., the connection portion 416 of FIGS. 7 to 9) of the board 410 may be physically and/or electrically connected to a connector 3901 (e.g., the connector 3901 of FIG. 13B) of a conductive connection member 390 (e.g., the conductive connection member 390 of FIG. 13B).

According to an embodiment, at least a portion of the conductive connection member 390 may be electrically connected to a first circuit board 348 (e.g., the first circuit board 348 of FIG. 6).

According to an embodiment, when the electronic device 101 is in the slid-in state (e.g., FIG. 2, FIG. 5A, or FIG. 15A), as the second housing portion 302 is positioned in the retracted position with respect to the first housing portion 301, the conductive connection member 390 may be configured to be at least partially folded.

According to an embodiment, when the electronic device 101 is in the slid-out state (e.g., FIG. 3, FIG. 5B, or FIG. 15B), as the second housing portion 302 is positioned in the extended position with respect to the first housing portion 301, the first circuit board 348 may move together with the second housing portion 302 and may move away from the connection portion 416. In this case, as the conductive connection member 390 is at least partially unfolded, the electrical connection state between the antenna structure 400 and the first circuit board 348 may be maintained.

According to an embodiment, when the electronic device 101 is in the slid-in state or the slid-out state, the electrical connection state between the first circuit board 348 and the antenna structure 400 may be maintained through the conductive connection member 390. Wireless charging power generated through the antenna structure 400 may be transmitted to the first circuit board 348 through the conductive connection member 390, and power transmitted to the first circuit board 348 may be transmitted to a battery (e.g., the battery 389 of FIG. 6), so that the battery may be charged.

According to an embodiment of the disclosure, it may be possible to provide an antenna structure in which an arrangement area or a mounting area of a wireless charging coil is improved, and an electronic device including the antenna structure.

However, problems to be solved in the disclosure are not limited to the above-mentioned problems and may be variously determined without departing from the spirit and scope of the disclosure.

According to an embodiment of the disclosure, it may be possible to provide an antenna structure in which charging efficiency and a charging recognition distance of a wireless charging coil are improved, and an electronic device including the antenna structure.

The effects that may be obtained in the disclosure are not limited to the above-mentioned effects, and other effects not mentioned above will be clearly understood by those ordinarily skilled in the art to which the disclosure pertains from the following description.

According to an embodiment of the disclosure, an electronic device 101 may include a housing 310, a circuit board 348, an antenna structure 400, or a conductive connection member 390. The housing 310 may include a first housing portion 301 or a second housing portion 302. The first housing portion 301 may include an opening 312. The second housing portion 302 may be configured to move with respect to the first housing portion 301. The circuit board 348 may be disposed in the second housing portion 302. The antenna structure 400 may be disposed in the first housing portion 301. The conductive connection member 390 may be electrically connected to the circuit board 348 and the antenna structure 400. The antenna structure 400 may include a board 410 or a first coil 421. The board 410 may include a base portion 411 or an extension portion 413. The base portion 411 may be disposed in the first housing portion 301. The extension portion 413 may extend from the base portion 411. The extension portion 413 may be disposed to overlap the opening 312. The first coil 421 may be disposed on the board 410. At least a portion of the first coil 421 may overlap the opening 312.

According to an embodiment, the second housing portion 302 may include a second plate 321d. The first housing portion 301 may include a first plate 311d. The first plate 311d may be at least partially disposed outside the second plate 321d. The first plate 311d may include the opening 312. The circuit board 348 may be disposed on the second plate 321d. The antenna structure 400 may be disposed on the first plate 311d.

According to an embodiment, the second housing portion 302 may be configured to move in a first direction with respect to the first housing portion 301. The conductive connection member 390 may include a connector 3901. The connector 3901 may be electrically connected to the antenna structure 400. The connector 3901 may overlap the opening 312 in a second direction perpendicular to the first direction.

According to an embodiment, the base portion 411 may include a plurality of first layers. The extension portion 413 may include a plurality of second layers. The number of first layers may be different from the number of second layers.

According to an embodiment, the number of first layers may be greater than the number of second layers.

According to an embodiment, the extension portion 413 may be configured to be bendable with respect to the base portion 411.

According to an embodiment, the antenna structure 400 may further include a support member 460. The support member 460 may cover the opening 312. The support member 460 may be configured to support the extension portion 413.

According to an embodiment, the electronic device 101 may further include an adhesive member 480. The adhesive member 480 may be disposed between the support member 460 and an inner rim of the first housing portion 301 defining the opening 312.

According to an embodiment, the adhesive member 480 may be adhered to at least two edges of the support member 460.

According to an embodiment, the antenna structure 400 may further include a first shielding member 431 or a second shielding member 433. The first shielding members 431 may be disposed below the base portion 411. The second shielding members 433 may be disposed below the extension portion 413. The thickness or number of second shielding members 433 may be smaller than the thickness or number of first shielding members 431.

According to an embodiment, the electronic device 101 may further include a heat dissipation member 440. The heat dissipation member 440 may be disposed between the first shielding member 431 and the first housing portion 301.

According to an embodiment, the antenna structure 400 may further include a second coil 422. The second coil 422 may be disposed at an edge of the board 410. The first coil 421 may be at least partially disposed inside the second coil 422.

According to an embodiment, at least a portion of the second coil 422 may overlap the opening 312.

According to an embodiment, the electronic device 101 may further include a battery 389. The battery 389 may be disposed in the housing 310. The first coil 421 may be electrically connected to the battery 389 through the conductive connection member 390 and the circuit board 348.

According to an embodiment, the conductive connection member 390 may include a flexible printed circuit board (FPCB).

According to an embodiment of the disclosure, an electronic device 101 may include a housing 310, a circuit board 348, an antenna structure 400, or a conductive connection member 390. The housing 310 may include a first housing portion 301 or a second housing portion 302. The first housing portion 301 may include an opening 312. The second housing portion 302 may be configured to move with respect to the first housing portion 301. The circuit board 348 may be disposed in the second housing portion 302. The antenna structure 400 may be disposed in the first housing portion 301. The conductive connection member 390 may be electrically connected to the circuit board 348 and the antenna structure 400. The antenna structure 400 may include a board 410 or a first coil 421. The board 410 may include a base portion 411, an extension portion 413, or a connection portion 416. The base portion 411 may be disposed in the first housing portion 301. The extension portion 413 may extend from the base portion 411. The extension portion 413 may be disposed to overlap the opening 312. The connection portion 416 may extend from the base portion 411. The connection portion 416 may be electrically connected to the conductive connection member 390. The first coil 421 may be disposed on the board 410. The connection portion 416 may be at least partially disposed in the opening 312.

According to an embodiment, the conductive connection member 390 may further include a connector 3901. The connector 3901 may be connected to the connection portion 416. The connector 3901 may overlap the opening 312.

According to an embodiment, when the second housing portion 302 moves with respect to the first housing portion 301, the circuit board 348 may move together with the second housing portion 302.

According to an embodiment, the board 410 may further include a bending portion 412. The bending portion 412 may be connected to the base portion 411 and the extension portion 413. The bending portion 412 may be configured to be at least partially folded or unfolded.

According to an embodiment, the first housing portion 301 may include a protruding portion 311e. The protruding portion 311e may protrude from at least a portion of the first housing portion 301. The protruding portion 311e may be disposed to correspond to the bending portion 412.

Although specific embodiments have been described above in the detailed description of the disclosure, it will be apparent to those ordinarily skilled in the art that various modifications may be made without departing from the scope of the disclosure.

## Claims

1. An electronic device (101) comprising:
a housing (310) including a first housing portion (301) including an opening (312), and a second housing portion (302) configured to move with respect to the first housing portion (301);
a circuit board (348) disposed in the second housing portion (302);
an antenna structure (400) disposed on the first housing portion (301); and
a conductive connection member (390) electrically connected to the circuit board (348) and the antenna structure (400),
wherein the antenna structure (400) includes:
a board (410) including a base portion (411) disposed on the first housing portion (301), and an extension portion (413) extending from the base portion (411) and disposed to overlap the opening (312); and
a first coil (421) disposed on the board (410), at least a portion of the first coil (421) overlapping the opening (312).

2. The electronic device of claim 1, wherein the second housing portion (302) includes a second plate (321d),
wherein the first housing portion (301) includes a first plate (311d) at least partially disposed outside the second plate (321d) and including the opening (312),
wherein the circuit board (348) is disposed on the second plate (321d), and
wherein the antenna structure (400) is disposed on the first plate (311d).

3. The electronic device of any one of claims 1 to 2, wherein the second housing portion (302) is configured to move with respect to the first housing portion (301) in a first direction, and
wherein the conductive connection member (390) is electrically connected to the antenna structure (400) and overlaps the opening (312) in a second direction perpendicular to the first direction.

4. The electronic device of any one of claims 1 to 3, wherein the base portion (411) includes a plurality of first layers,
wherein the extension portion (413) includes a plurality of second layers, and
wherein a number the first layers is different from a number of second layers.

5. The electronic device of any one of claims 1 to 4, wherein the number of the first layers is greater than the number of the second layers.

6. The electronic device of any one of claims 1 to 5, wherein the extension portion (413) is configured to be bendable with respect to the base portion (411).

7. The electronic device of any one of claims 1 to 6, wherein the antenna structure (400) further includes a support member (460) covering the opening (312) and configured to support the extension portion (413).

8. The electronic device of any one of claims 1 to 7, further comprising:
an adhesive member (480) disposed between the support member (460) and an inner rim of the first housing portion (301) defining the opening (312).

9. The electronic device of any one of claims 1 to 8, wherein the adhesive member (480) is adhered to at least two edges of the support member (460).

10. The electronic device of any one of claims 1 to 9, wherein the antenna structure (400) further includes:
a first shielding member (431) disposed below the base portion (411); and
a second shielding member (433) disposed below the extension portion (413),
wherein a thickness or number of second shielding members (433) is smaller than a thickness or number of first shielding members (431).

11. The electronic device of any one of claims 1 to 10, further comprising:
a heat dissipation member (440) disposed between the first shielding member (431) and the first housing portion (301).

12. The electronic device of any one of claims 1 to 11, wherein the antenna structure (400) further includes a second coil (422) disposed at an edge of the substrate 410, and
wherein the first coil (421) is disposed at least partially inside the second coil 422.

13. The electronic device of any one of claims 1 to 12, wherein at least a portion of the second coil (422) overlaps the opening 312.

14. The electronic device of any one of claims 1 to 13, further comprising:
a battery (389) disposed in the housing (310),
wherein the first coil (421) is electrically connected to the battery (389) through the conductive connection member (390) and the circuit board (348).

15. The electronic device of any one of claims 1 to 14, wherein the conductive connection member 390 includes a flexible printed circuit board (FPCB).
